# EUROPÄISCHE PATENTANMELDUNG

(11) **EP 4 112 274 A1**
(43) Veröffentlichungstag der Anmeldung: **04.01.2023**
(21) Anmeldenummer: 21183040.1
(22) Anmeldetag: 01.07.2021
(51) Int. Cl.: B29C 64/118, B29C 64/214, B33Y 10/00, B33Y 30/00, B29C 70/38

(54) **DRUCKKOPFAUFBAU FÜR DIE ADDITIVE FERTIGUNG MIT ENDLOSEN FASERN UND THERMOPLASTISCHER MATRIXWERKSTOFFE ZUM SCHNEIDEN IM HEISSEN BEREICH DES DRUCKKOPFES MITTELS EINER AXIAL- ODER DREHBEWEGUNG**

(71) Anmelder: Technische Universität Berlin, 10623 Berlin (DE)
(72) Erfinder: CZASNY, Mathias, 10715 Berlin (DE); GURLO, Aleksander, 14089 Berlin (DE); KÖRBER, Stephan, 12045 Berlin (DE); KABA, Onur, 12347 Berlin (DE)
(74) Vertreter: Hertin und Partner Rechts- und Patentanwälte PartG mbB

(57) **Zusammenfassung**

In einem ersten Aspekt betrifft die Erfindung Druckkopf zur additiven Fertigung von Faserverbundwerkstoffen umfassend ein Zuführungskanal, ein Filament, einen Heizblock, eine Düse und eine Schneideeinheit, wobei das Filament durch den Zuführungskanal in die Düse gelangt, wobei die Düse einen Ausgang und einen Eingang umfasst und das Filament durch den Zuführungskanal den Ausgang der Düse betritt /betritt und über den Eingang die Düse verlässt und auf einem Druckbett abgelegt wird. Dabei befindet sich die Schneideeinheit innerhalb des Heizblocks. Dies wirkt sich vorteilhaft auf den Schnitt und/oder die Scherung des zu druckenden Materials aus.

In einem weiteren Aspekt betrifft die Erfindung ein Verfahren, das das Filament schneidet und/oder schert, wobei die Schneideeinheit eine lineare Bewegung, eine Rotation oder der Druckkopf selbst eine lineare Bewegung oder eine Rotation durchführt, sodass das Filament geschnitten und/oder abgeschert wird.

In einem zusätzlichen Aspekt betrifft die Erfindung ein System umfassend mehrere der erfindungsgemäßen Druckköpfe.

## Beschreibung

In einem ersten Aspekt betrifft die Erfindung einen Druckkopf zur additiven Fertigung von Faserverbundwerkstoffen umfassend ein Zuführungskanal, ein Filament, einen Heizblock, eine Düse und eine Schneideeinheit, wobei das Filament durch den Zuführungskanal in die Düse gelangt, wobei die Düse einen Ausgang und einen Eingang umfasst und das Filament durch den Zuführungskanal den Ausgang der Düse betritt und über den Eingang die Düse verlässt und auf einem Druckbett abgelegt wird. Dabei befindet sich die Schneideeinheit innerhalb des Heizblocks. Dies wirkt sich vorteilhaft auf den Schnitt und/oder die Scherung des zu druckenden Materials aus.

In einem weiteren Aspekt betrifft die Erfindung ein Verfahren, das das Filament schneidet und/oder schert, wobei die Schneideeinheit eine lineare Bewegung, eine Rotation oder der Druckkopf selbst eine lineare Bewegung oder eine Rotation durchführt, sodass das Filament geschnitten und/oder geschert wird.

In einem zusätzlichen Aspekt betrifft die Erfindung ein System umfassend mehrere der erfindungsgemäßen Druckköpfe.

### Hintergrund und Stand der Technik

Im Laufe des 21. Jahrhunderts sind additive Fertigungsverfahren, auch bekannt als 3D-Druck oder Rapid Prototyping, sehr viel beliebter und bekannter geworden. In einigen Bereichen finden diese Technologien bereits den Einzug in die Serienfertigung und werden nicht mehr nur für Prototypen verwendet. Laut aktuellem Normentwurf DIN EN ISO/ASTM 52900:2018 werden sieben verschiedene Kategorien der additiven Fertigung unterschieden. Ein bekanntes Beispiel ist die Materialextrusion, bei der das Material direkt in Form von geschmolzenem Granulat oder Draht (Filament) auf eine Basisplatte aufgebracht wird. Eine weitere Möglichkeit ist das pulverbasierte Schmelzen, bei dem das Bauteil aus einem Pulverbett erzeugt wird. Weitere Verfahren nutzen UV aushärtbare Harze (Photopolymerisation im Bad und Material Jetting). Zudem sind weitere Technologien bekannt, die auf Draht, Pulver, Flüssigkeiten oder Lagen aus kompletten Platten/Folien basieren.

Die vorgeschlagene Erfindung ist speziell der Technik der Materialextrusion (engl.: Fused Deposition Modelling (FDM) bzw. Fused Filament Fabrication (FFF)) zuzuordnen. Bei diesem Verfahren werden kontinuierlich Bahnen abgelegt, indem das Material durch eine meist beheizte Düse gepresst wird. Diese Bahnen werden schichtweise abgelegt, je nach vorgegebener äußerer Kontur und innerem Aufbau, wodurch das dreidimensionale Objekt aufgebaut wird.

Eine entscheidende Komponente eines 3D-Druckers - die Vorrichtung, um die additive Fertigung durchzuführen - ist dessen Druckkopf. Aus dem Druckkopf wird das Material für den Druckvorgang extrudiert (herausgepresst). Das Material umfasst häufig ein thermoplastisches Polymer, das auf eine Verarbeitungstemperatur vorzugsweise über der Schmelz- bzw. Erweichungstemperatur in den thermoplastischen Materialzustand erhitzt und dann durch die Düse, eine wichtige Komponente des Druckkopfes, gepresst wird. Durch das anschließende Abkühlen wird die gedruckte Geometrie eingefroren und behält ihre Form bei. Die Materialien können in gefüllte und ungefüllte Thermoplaste unterteilt werden, also ob es sich um einen reinen Thermoplast (unverstärkt, Phase 1) oder um einen verstärkten Thermoplasten (Phase 1 Verstärkung und Phase 2 Matrix) handelt. Verstärkte Thermoplasten werden als Verbundwerkstoffe bezeichnet. Ist die Faserlänge endlos, kontinuierlich oder lang, wird häufig auch der Ausdruck Faserverbundwerkstoff verwendet. Bei den verstärkten Thermoplasten muss man die Dimensionen der Verstärkung beachten. Kurzfasern (Faserlänge ca. 50 µm - ca. 500 µm) können wie unverstärkte Thermoplaste verarbeitet werden. Am Ende der Bahn wird ein Retract (Zurückziehen des Filaments und ein damit verbundener Druckabbau) durchgeführt und der Schmelzstrang getrennt, wenn die Düse mit hoher Geschwindigkeit zur nächsten Position fährt. Bei längeren Faserlängen (Faserlänge, ca. 10 mm - ca. 100 mm), insbesondere bei Endlosfaserverstärkung (Faserlänge >100 mm), muss der Strang aber vor, in oder nach der Düse geschnitten werden, da ein Trennen über den Retract bei einer großen Anzahl an Fasern nicht mehr möglich ist. Die Zugfestigkeit des Materials ist so groß, dass es das gedruckte Bauteil von der Plattform reißen würde. Neben der Düse umfasst der Druckkopf weitere Komponenten, auf die weiter unten näher eingegangen wird.

Im Stand der Technik sind diverse Aufbauten von 3D-Druckern und Druckköpfen bekannt.

In US 2015/016591 A1 wird ein 3D-Drucker mit einem Druckkopf offenbart, der eine Schneidevorrichtung umfasst, die von einer Steuerung kontrolliert wird und das endlosfaserverstärkte Filament während des Abscheidungsprozesses schneidet. Damit können Strukturen oder bestimmte Muster auf oder in das zu bedruckende Bauteil gebildet werden. Durch die gerichtete Ablage des endlosfaserverstärkten Filaments kann die Orientierung der Faser vorgenommen werden. Die Faserorientierung führt zu einer starken Anisotropie, die sich durch hohe Zugfestigkeiten in Faserrichtung (faserdominant) und niedrige Festigkeiten senkrecht zur Faser (matrixdominant) ausbildet. Das Schneiden erfolgt vor dem Schmelzen des Filaments. Zudem wird in einer Recheneinheit eine Software, die als Slicer bezeichnet wird, abgespielt, die die Bewegungen des Druckkopfes und den Schneidevorgang der Schneidevorrichtung bestimmt.

In WO 2014/153535 A2 wird ebenfalls ein Druckkopf offenbart, der eine Schneideeinheit umfasst. Die Schneideeinheit schneidet durch einen Schneidemechanismus das endlosfaserverstärkte Filament, wobei die Schneideeinheit an eine Trägerplatte befestigt ist. Die Schneideeinheit kann das Filament schneiden und/oder scheren, bevor es in den Druckkopf gelangt oder nachdem es diesen verlässt, um auf das Druckbett zu gelangen.

In US 9370896 B2 werden dieselben Positionen für die Schneideeinheit offenbart wie die zuvor genannten Patentschriften.

In US 2020/0114578 A1 wird ein Druckkopf für die additive Fertigung offenbart, worin sich die Schneideeinheit zwischen einem Zuführkanal und dem Heizblock befindet. Betrieben wird die Schneideeinheit durch einen Servoantrieb. Die Schneideeinheit selbst kann ein bewegliches oder stationäres Messer sein.

In DE 102018002545 A1 wird ein Verfahren zur Herstellung eines Extrudats offenbart. Darin wird eine Schneideeinheit beschrieben, die das an einer Extrusionseinheit herausgepresste Extrudat, soweit es erforderlich ist, abschneiden kann. Die Schneideeinheit umfasst ein bewegliches Schneideelement, das mit einem Schlitten an einem Grundkörper gelagert ist. Dadurch kann eine Translationsbewegung für den Schnitt durchgeführt werden.

All diese im Stand der Technik bekannten Vorrichtungen und Verfahren zur additiven Fertigung haben gemein, dass das Material, was geschnitten oder geschert werden soll, eher gebrochen als tatsächlich geschnitten wird. Das liegt insbesondere daran, dass das Material, welches meistens faserverstärkt ist, eine hohe Sprödigkeit aufweist. Dadurch wird der Schnitt des Materials erschwert.

Zudem muss im Stand der Technik im Slicer berücksichtigt werden, dass der Schnitt vor dem Ende der Bahn erfolgt. Das restliche Filament wird dann durch den Heizblock über die Düse auf das Druckbett befördert. Bei einer neuen Bahn muss das Filament bis zur Düse befördert werden, um auch tatsächlich am Startpunkt der Materialablage zu beginnen. Dadurch werden zusätzliche Rechenoperationen im Slicer benötigt, die das komplette Druckverfahren langsamer und komplexer machen.

Aus dem Stand der Technik ist es nicht bekannt, in additiven Fertigungsverfahren einen besonders einfachen und effizienten Schnitt des zu druckenden Materials zu ermöglichen, insbesondere nicht für endlosfaserverstärkte Materialien.

### Aufgabe der Erfindung

Aufgabe der vorliegenden Erfindung war es, die Nachteile des Standes der Technik zu beseitigen und einen Druckkopf für additive Fertigungsverfahren bereitzustellen, mit dem besonders einfach, gut und effizient das Material, insbesondere endlosfaserverstärkte Filamente, geschnitten und/oder geschert werden kann.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung einen Druckkopf zur additiven Fertigung von Faserverbundwerkstoffen umfassend einen Zuführungskanal, ein Filament, einen Heizblock, eine Düse und eine Schneideeinheit, wobei das Filament durch den Zuführungskanal in die Düse gelangt, wobei die Düse einen Ausgang und einen Eingang umfasst und das Filament durch den Zuführungskanal den Ausgang der Düse betritt und über den Eingang die Düse verlässt und auf einem Druckbett abgelegt wird, wobei die Düse am Heizblock befestigt ist oder als Öffnung im Heizblock integriert vorliegt, dadurch gekennzeichnet, dass die Schneideeinheit innerhalb des Heizblocks integriert ist und die Schneideeinheit dazu konfiguriert ist, das Filament innerhalb des Heizblocks zu schneiden und/oder zu scheren.

Die Position der Schneideeinheit innerhalb des Heizblocks hat sich dahingehend als besonders vorteilhaft erwiesen, dass die Schneideeinheit das Filament besonders einfach schneiden und/oder scheren kann. Innerhalb des Heizblocks liegt eine hohe Temperatur vor, sodass das Filament innerhalb des Heizblocks schmilzt. Da das Filament sich innerhalb des Heizblocks im geschmolzenen und/oder pastösen Zustand befindet, erleichtert dies den Schnitt und/oder das Scheren des Filaments erheblich.

Dagegen war es im Stand der Technik üblich, die Schneideeinheit vor dem Heizblock zu platzieren. Das liegt unter anderem daran, dass die Schneideeinheit als zusätzliche Komponente nicht in dem Heizblock verbaut werden konnte, da eine Ansteuerung mittels einem Servomotor von der Klinge getrennt werden muss. Elektrische Bauteile halten die hohen Verarbeitungstemperaturen von ca. 200 - ca. 450°C nicht stand. Im Stand der Technik werden vor allem Filamente mit einer geringen Anzahl an Einzelfasern verwendet, was zu einem kleinen Querschnitt und damit verbundenen niedrigen Trennkräften führt. Bei größeren Garnstärken (3k, 6k, 12k, 24k, 48k, wobei das k die Anzahl der Einzelfilamente in 1000 Filamenten angibt, d. h. 3k = 3000 Filamente, 6k = 6000 Filamente usw.) müssen größere Trennkräfte aufgebracht werden, um das Material zu trennen.

Vor dem Heizblock liegt jedoch eine Temperatur vor, die nicht der Schmelztemperatur des Filaments entspricht. Wie eingangs beschrieben, ist es üblich, für das Filament Faserverbundwerkstoffe zu nutzen. Je höher der Anteil an Fasern ist, desto fester, starrer und spröder ist das Material. Und je fester, starrer und spröder das Material ist, desto schwieriger gestaltet sich das Schneiden dieses Materials bei niedrigen Temperaturen.

Die Schneideeinheit hinter dem Heizblock zu platzieren, d. h. nachdem das Filament und somit das zu druckende Material den Heizblock verlassen hat, bringt ähnliche Probleme mit sich. Außerhalb des Heizblocks liegt eine deutlich geringere Temperatur vor, als sie im Heizblock vorzufinden ist. Nachdem das Material den Heizblock verlässt, wird es durch die Abkühlung wieder fest und ist nicht mehr verformbar. Dies wiederum erschwert das Schneiden erneut. Für den aktuellen Stand der Technik ergibt sich das Problem, dass der Filamentquerschnitt im kalten Zustand nicht verformt werden darf, da sonst das kalte Filament nicht mehr in die Düse zurückgezogen (Schneiden nach der Düse) oder überhaupt in die Düse eingeführt werden kann (Schneiden vor dem Kühlkörper). Beim Schneiden im Heizblock kann hingegen der Materialquerschnitt vorteilhafterweise nach der Verformung durch den Schnitt einfacher in eine Runde Form gebracht werden, in dem er durch einen Retract in den kalten Bereich zurückgezogen wird. Durch die Geometrie des Zuführungskanals wird der neue Filamentquerschnitt eingestellt und kann anschließend schneller wieder gefördert werden, da das noch nicht vollständig aufgeschmolzene Filament sich schneller durch die Düse führen lässt und mögliche Verunreinigungen mit ausstoßen kann. Beim Druckprozess wird dann ein langsamerer Vorschub vorgegeben, sodass das vollständige Aufschmelzen möglich ist und eine Verbindung mit dem Druckbett oder einer vorherigen Schicht eingegangen werden kann.

Um das Material erfolgreich zu schneiden oder abzuscheren, müssen gewisse Scher-, Schub-, Zug- und/oder Druckkräfte wirken. Dabei war es völlig überraschend, dass eine Positionierung der Schneideeinheit innerhalb des Heizblocks den Betrag dieser aufzuwendenden Kräfte in einem erheblichen Maße verringert. Durch die Integration der Schneideeinheit im Heizblock wird der Schneidevorgang selbst erleichtert und der Druckprozess in ihrer Gesamtheit vorteilhafterweise beschleunigt. Physikalisch lässt sich dies damit begründen, dass sich das Filament innerhalb des Heizblocks bereits im Schmelzzustand befindet. Damit ist das Filament viskos und kann einfacher geschnitten und/oder geschert werden.

Nicht nur das Schneiden und/oder das Scheren, auch für andere Aspekte bei der additiven Fertigung hat sich die Platzierung der Schneideeinheit innerhalb des Heizblocks als sehr vorteilhaft erwiesen, wie im folgenden Beispiel erläutert wird.

Bei der additiven Fertigung wird eine Software verwendet, die man als Slicer bezeichnet und die einen hohen Beitrag beim Druckprozess leistet. Der Slicer wirkt als Vermittler zwischen einem 3D-Modell, das von einem Nutzer eingegeben wird, und dem 3D-Drucker selbst. Der Slicer konvertiert das eingegebene 3D-Modell in eine Reihe von dünnen Bahnen und Materialschichten, die auf das Druckbett gelangen, um das Bauteil herzustellen. Dabei werden Parameter, wie beispielsweise die Bewegungen des Druckkopfes und die Temperatur des Heizblocks, berechnet und an den Druckkopf oder dem 3D-Drucker in Form eines G-Codes übermittelt. Der G-Code, auch DIN-Code genannt, ist eine Maschinensprache, mit deren Hilfe ein Nutzer der Maschine sagt, was sie machen soll. Oftmals zeichnen Nutzer in einem CAD-Programm (CAD ist die Abkürzung für den engl. Ausdruck computer aided design) das Bauteil, was sie durch den 3D-Druck herstellen wollen. Der G-Code ist also ein Vermittler zwischen dem CAD-Programm und dem 3D-Drucker. Es war völlig überraschend, dass sich die Berechnungen vereinfachen, die der Slicer vornimmt, wenn sich die Schneideeinheit innerhalb des Heizblocks befindet. Das liegt daran, dass kein großer Abstand zwischen Schneideeinheit und Düse im Slicer berücksichtigt werden muss, da der Schneidevorgang direkt am Ende der abgelegten Bahn des Filaments erfolgt. Bei bisherigen Slicern muss der Abstand zwischen Düse und Schneidekante (typischerweise ca. 20 - ca. 40 mm) bekannt sein und der Schnitt vor dem Bahnende durchgeführt werden. Die Erzeugung der Bahn erfolgt durch das Auflösen einer STL-Datei (STL ist die Abkürzung für den engl. Ausdruck Stereo Lithography oder Standard Tessellation Language) in einzelne gerade Bahnelemente. Im STL-Format wird eine 3-dimensionale Oberfläche durch Dreiecke mit den Eckpunkten und der Flächennormalen beschrieben. Der Rechenaufwand erhöht sich deutlich, wenn der Abstand zwischen Düse und Schneidekante nicht auf einen Eckpunkt der Dreiecke fällt, sondern dazwischen. Dies entspricht der Regel, dass die gedruckte Geometrie unabhängig der Schneideeinheit konstruiert wird. Hierbei muss der Sliceralgorithmus die gerade Bahn aufbrechen und in zwei Teilstücke zerlegen, um den Abstand Düse-Schneidekante genau einzuhalten. Bei der hier vorgestellten Erfindung kann der Schnitt am Ende der Bahn unabhängig von der Auflösung der STL-Datei erfolgen. Somit werden vorteilhafterweise weniger rechenintensive Schritte im Slicer benötigt und der gesamte Rechenvorgang und Druckprozess beschleunigen sich.

Vorteilhafterweise ergibt sich insgesamt ein schnellerer Druckprozess dadurch, dass sich die Schneideeinheit innerhalb des Heizblocks befindet. Die Schneideeinheit benötigt einen geringeren Kräfteeinsatz, da das Filament innerhalb des Heizblocks bereits schmilzt. Somit schneidet die Schneideeinheit das Filament innerhalb einer kürzeren Zeit.

Bei der additiven Fertigung hat sich eine typische Druckgeschwindigkeit von ca. 40 - ca. 80 mm/s etabliert. Mit einer Druckgeschwindigkeit von ca. 40 mm/s können vorteilhafterweise Bauteile mit sehr hoher Qualität gedruckt bzw. hergestellt werden. Eine Druckgeschwindigkeit von ca. 80 mm/s kann beispielsweise für "einfache" Bauteile (beispielsweise Bauteile mit geringen und/oder weniger komplexen geometrischen Strukturen) genutzt werden, insbesondere wenn es erwünscht ist, die Druckzeit zu reduzieren. Abhängig von der Endgeschwindigkeit sind vor allem die Beschleunigung und der Jerk, welcher dem Ruck entspricht, also jene Geschwindigkeit, die ohne Beschleunigung direkt am Beginn der Bewegung vorgegeben wird. Diese zwei Werte werden insbesondere durch die Steifigkeit der Bewegungseinheit mit Motoren, Führungen und Zahnriemen sowie der Steifigkeit des Druckkopfes und des Schlittens begrenzt. Ein hohes Druckkopfgewicht führt zu Fehlstellen, sogenannten Rattermarken, aufgrund der Dehnung der Zahnriemen. Diese treten vor allem an Ecken auf und sind eine Art Echo des Richtungswechsels, der sich durch ein Schwingen des Druckkopfes bzw. der Bewegungseinheit ausbilden kann. Ein möglichst leichter Druckkopf, der kompakt konstruiert und damit steifer und weniger schwingungsanfällig ist, führt zu einer guten Bauteilqualität bei hohen Druckgeschwindigkeiten. Vorteilhafterweise wird mit dem erfindungsgemäßen Druckkopf ein solches Mitschwingen verhindert. Die Druckgeschwindigkeit ist nur ein Parameter, insbesondere die Ausstoßmenge limitiert den Druckprozess, da bei hohen Geschwindigkeiten mehr Filament in der Düse aufgeschmolzen und auf die Verarbeitungstemperatur gebracht wird.

Beim Druck mit Endlosfaserverbundwerkstoffen druckt man aktuell mit einer Geschwindigkeit von ca. 5 - ca. 15 mm/s, da man eine gute Schichtanhaftung möchte und hier die Kontaktzeit zwischen heißem Strang und kalter darunterliegenden Ebene entscheidend ist, wobei die Kontaktzeit und/oder die Schichtanhaftung maßgeblich durch die Druckgeschwindigkeit vorgegeben wird. Auch ist die Ausstoßmenge bei einer Bahn mit Faserverbund mit einer Lagenhöhe von beispielsweise ca. 0,2 mm und einer Breite von ca. 1,7 mm im Vergleich zu einem unverstärktem Thermoplasten mit Lagenhöhe ca. 0,2 mm und einer Breite von ca. 0,4 mm - ca. 0,5 mm 3-4 Mal höher und muss in Bezug auf die kritische Ausstoßmenge mit betrachtet werden.

Ein deutlicher Vorteil ergibt sich insbesondere durch die erfindungsgemäße Vorrichtung beim Schneiden und Düsenwechsel oder Druckkopfwechsel in einem System umfassend mehrere Druckköpfe, da hier jede zeitliche Einsparung mit der Dauer des Prozessschrittes reduziert werden kann. Komplexe Bauteile mit z. B. ca. 100 mm Höhe und ca. 0,2 mm Lagenhöhe haben beispielsweise ca. 500 Schichten. Bei 2 Materialien mit einem Mittelwert von 1,5 Schnitten für den Faserverbund pro Schicht ergeben sich 1250 Werkzeugwechsel bzw. Schneideaktionen. Bei ca. 2 s Einsparung pro Werkzeugwechsel/Schnitt können ca. 41 Minuten eingespart werden bei einer Gesamtdruckzeit von ca. 6 h - 8 h (Stunden).

Zudem ist es sehr vorteilhaft, dass der Gesamtaufbau des erfindungsgemäßen Druckkopfes besonders einfach ist, da der Druckkopf lediglich den Heizblock mit der darin integrierten Schneideeinheit und eine Zuführung des Filaments benötigt. Die bevorzugte Anbringung der Düse als eine Bohrung in den Heizblock ist hierbei besonders vorteilhaft, da ein sehr kompakter Heizblock bereitgestellt werden kann, der bereits die Schneideeinheit und die Düse beinhaltet. Beim Aufbau des Druckkopfes können damit vorteilhafterweise zusätzliche Schritte vermieden werden. Durch den kompakten und kleinen Aufbau kann vorteilhafterweise die Gesamtkonstruktion des 3D-Druckers verkleinert werden. Die Gesamtgröße ist abhängig vom Druckbett und den Linearschienen oder Wellen und/oder Motoren der Bewegungseinheit. Zusätzlich muss ein freier Raum zwischen Linearschiene/Wellen und Druckbett eingeplant werden, wenn der Druckkopf mehrere Düsen besitzt, sodass jede Düse die Druckfläche auch erreichen kann. Die nichtverwendeten Düsen und das Druckkopfgehäuse ragen dabei über die Druckfläche hinaus. Eine kleinere Gesamtkonstruktion führt zu Einsparungen in den Materialkosten bei der Herstellung bzw. ermöglicht bei schon bestehenden Druckern, dass die Druckfläche größer ist und damit besser ausgenutzt werden kann.

Vorzugsweise wird durch die Linearschiene und/oder einer Welle die Bewegung entlang einer oder mehrerer Achsen ermöglicht. Auf der Linearschiene oder der Welle ist bevorzugt ein Schlitten oder eine Axialkugellagerbuchse und/oder ein Endschalter zur Bestimmung der Anfangsposition angebracht. Bevorzugt wird die Verfahrlänge durch Anschläge festgegeben. Ein Anschlag bezeichnet hierbei den gewollten Endpunkt einer Bewegungsbahn.

Neben der Größe ist auch das Gesamtgewicht des Druckkopfes entscheidend. Gerade bei Multimaterialdruckköpfen mit mehreren Düsen und/oder mehreren Druckköpfen wird das Gesamtgewicht durch die einzelnen Gewichtsanteile der jeweiligen Düsen addiert. Eine schwere Schneideeinheit mit Servomotor steigert zusätzlich das Druckkopfgewicht deutlich. Bei hohen Beschleunigungen des Druckkopfes, die notwendig sind für hohe Geschwindigkeiten, muss die Bewegungseinheit und der Rahmen deutlich steifer und massiver ausgelegt werden. Insbesondere können Fehlstellen im Bauteil durch elastische Dehnung der Riemenantriebe erzeugt werden und damit zu einer deutlichen Reduzierung der Bauteilqualität bzw. Druckgeschwindigkeit führen. Als Grundregel gilt: Der Druckkopf und die bewegten Komponenten müssen so leicht wie möglich gefertigt werden, um Fehlstellen durch dynamische Prozesse (Beschleunigung und Abbremsen) zu vermeiden. Vorteilhafterweise sind die Komponenten, die die Schneideeinheit betreiben, und der Heizblock des erfindungsgemäßen Druckkopfes besonders leicht.

Die Bewegungseinheit ermöglicht die Bewegung des Druckkopfes entlang einer Geraden, einer Ebene und/oder eines 3-dimensionalen Raumes. Beispielsweise kann eine Bewegung des Druckkopfes entlang der x-y-Ebene zur Erzeugung der gedruckten Schicht erfolgen. Die Bewegungseinheit umfasst Antriebsmotoren, einen Riemenantrieb, eine Axialführung durch Linearschienen und/oder Wellen und beinhaltet Endstopps zur Bestimmung des Ursprungs und häufig auch Anschläge zur definierten Verfahrlänge.

Durch einen oder mehrere Riemenantriebe werden Kraft- und Bewegungsübertragungen mittels eines flexiblen Zahnriemens und Antriebsscheiben zwischen Motor und bewegter Achse bzw. dem Schlitten durchgeführt.

Darüber hinaus können durch die Platzierung der Schneideeinheit innerhalb des Heizblocks auch sogenannte Heavy Tows bedruckt werden. Heavy Tows sind besonders dicke Rovings, die ca. 48000 (48k) und bis zu 100000 Filamente umfassen. Ein Roving ist ein Faserbündel bestehend aus Einzelfasern, da die Einzelfasern einen Durchmesser von 7 µm (Mikrometer) haben und damit ca. 10 - ca. 15 Mal kleiner als ein menschliches Haar sind. Der Heavy Tow kann durch die Schneideeinheit besonders einfach geschnitten werden. Die Schwierigkeiten beim Schneiden solch dicker Stränge werden erfindungsgemäß durch die Platzierung der Schneideeinheit innerhalb des Heizblocks umgangen.

Der Druckkopf ist eines der entscheidenden Bauteile jedes 3D-Druckers. Er bezeichnet ursprünglich die Komponente des 3D-Druckers, innerhalb der das Filament strömt und worüber es letztendlich auf das Druckbett in den unterschiedlichen Lagen aufgetragen wird. Diese Komponenten werden auch (meistens gesamtheitlich betrachtet) als Hotend bezeichnet, da bei thermoplastischen Polymeren eine Verarbeitung bei Temperaturen über der Schmelztemperatur bzw. der Erweichungstemperatur notwendig ist. Der Druckkopf kann mit einer oder mehreren beheizten Düsen bestückt sein. In jeder Düse können ein anderes Material und/oder eine andere Farbe bei gleichem Polymertyp verarbeitet werden. Auch sind Kombinationen aus mehreren Materialzuführungen für eine Düse oder das Mischen der einzeln zugeführten Materialien möglich. Im 3D-Drucker können auch mehrere einzelne Druckköpfe integriert werden, wobei man dann von einem Werkzeugwechsler spricht. So wird nur der aktive Druckkopf bewegt und die anderen Druckköpfe bleiben in der Parkposition bis beim Werkzeugwechsel der alte Druckkopf abgesetzt und ein neuer Druckkopf aufgenommen wird. Hierbei bezeichnet der aktive Druckkopf den Druckkopf, der Material auf das Druckbett druckt, während die anderen Druckköpfe keinen Druck durchführen. Vorzugsweise findet zwischen Druckkopf und Druckbett, auf der das Material verdruckt werden soll, eine Relativbewegung statt, durch deren horizontale (bzw. parallel zur Druckfläche) Bewegungsanteile eine Deponierung des zu verdruckenden Materials in der horizontalen Ebene der Druckfläche stattfindet. Vertikale Bewegungsanteile (bzw. senkrecht zur Druckfläche) steuern die Deponierung in der Höhe (senkrecht zur Druckfläche) und somit wird die Lagenhöhe vorgegeben. Vorzugsweise umfasst der Druckkopf insbesondere einen Ausgabebereich, an dem das zu verdruckende Material entsprechend dem zu druckenden Werkstück auf die Druckfläche deponiert wird. Die Breite der Bahn wird durch die Düse vorgegeben, als Regel gilt: Extrusionsbreite gleich Düsenbreite. Je nach Slicer und Algorithmus werden auch ca. 120 % des Düsendurchmessers als Extrusionsbreite verwendet. Neben diesem Element kann der Druckkopf weitere Elemente umfassen, die für einen funktionierenden Druck dem Ausgabebereich unbedingt vorgelagert werden müssen, wie z. B. einen Sensor zur Überwachung der abgelegten Bahnen, eine Schneideeinheit bei endlosfaserverstärkten Filamenten oder einem Tool- bzw. Aktivierungswechsel bzw. Aktivierungselemente für mehrere Düsen.

3D-Druck wird synonym auch als additive Fertigung bzw. generative Fertigung bezeichnet. Hierbei ist insbesondere das sogenannte Fused Deposition Modeling (FDM; zu Deutsch auch Schmelzschichtung) oder Fused Filament Fabrication (FFF) erwähnenswert. Nach DIN-Norm 17296-2 wird das Verfahren als Material Extrusion bezeichnet. Hiermit ist ein Fertigungsverfahren gemeint, bei dem ein Werkstück schichtweise aus einem schmelzfähigen Kunststoff gefertigt wird. Verdruckt werden soll dabei vor allem ein Faserverbundwerkstoff umfassend eine Faserverstärkung (Kurzfasern ca. 50 µm - ca. 500 µm, Langfasern ca. 500 µm - ca. 100 mm oder Endlosfasern >100 mm) in einer Polymermatrix. Eine Polymermatrix wird bevorzugt auch als Kunststoffmatrix bezeichnet.

Ein 3D-Drucker bezeichnet eine Vorrichtung, mit der der 3D-Druck oder das additive Fertigungsverfahren verrichtet wird. 3D-Drucker werden in der Industrie, im Modellbau und der Forschung eingesetzt zur Fertigung von Modellen, Mustern, Prototypen, Werkzeugen, Endprodukten und für die private Nutzung verwendet. Daneben gibt es Anwendungen im Heim- und Unterhaltungsbereich, dem Baugewerbe sowie in der Kunst und Medizin.

Ein Faserverbundwerkstoff umfasst bevorzugt Verstärkungsfasern aus Fasern, z. B. Kohlenstofffasern, und einer Polymer- bzw. Kunststoffmatrix, welche die Fasern infiltriert. Mit Kunststoffmatrix und/oder Polymermatrix ist ein Werkstoff gemeint, welcher Polymere umfasst und in dem die Fasern eingebettet werden. Da die Fasern vorteilhafterweise eine höhere Steifigkeit als die Matrix aufweisen, wird einwirkende Last bzw. Kraft bevorzugt entlang der Fasern geleitet, wodurch sich die Gesamtstabilität des Faserverbundwerkstoffes vorzugsweise erhöht. Die höhere Steifigkeit führt bei einer gleichen Dehnung zwischen Faser und Matrix zu deutlich höheren Spannungen in der Faser. Bei Faserbruch versagt das Bauteil katastrophal, da die Fasern häufig sehr spröde sind. Bei einem Matrixversagen können die Fasern nicht mehr gestützt werden und es folgt ein je nach belastungsabhängiger Versagenstyp.

Eine Faser ist insbesondere ein lineares, längliches Gebilde, das aus einem Faserstoff besteht und eine Faserform aufweist, wobei die Längsform z. B. glatt oder kraus und die Querschnittsform beispielsweise rund oder eckig ist. Mit Fasern sind vor allem dünne Fäden von bevorzugt einigen Mikrometern Durchmesser bezeichnet. Beispielsweise bei Kohlenstofffasern beträgt der Durchmesser nach dem Stand der Technik ca. 7 µm, wobei auch kommerzielle Fasern mit kleineren Durchmessern (z. B. ca. 5 µm) erhältlich sind. Aber auch dickere und/oder dünnere Fasern sind bekannt und können zum Einsatz kommen.

Des Weiteren können Fasern auch bevorzugt als Garn vorliegen. Hierbei sind Fasern unterschiedlicher Länge insbesondere miteinander verzwirbelt, gerissen oder verflochten. Neben dem Garn kann das Faserbündel auch unverzwirbelt vorliegen, dann spricht man von einem Roving bzw. Faserbündel. Der Kunststoff kann bevorzugt ein thermoplastisches, ein duroplastisches und/oder ein elastomeres Material umfassen. Thermoplasten sind leicht zu verarbeiten. Duroplasten sind bevorzugt auch unter hohen Temperaturen besonders stabil und können vor allem unter Wärmeeinwirkung nicht verformt werden. Elastomere weisen insbesondere eine hohe Umwandlungsfähigkeit auf und besitzen eine höhere Energieadsorption.

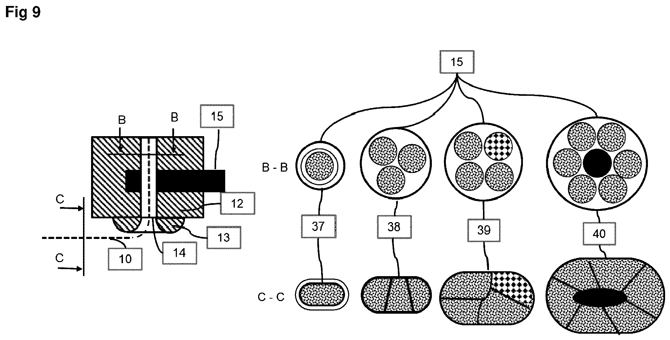

Der Thermoplast kann auf Polymertypen wie die Gruppe der Polyamide (PA12, PA11, PA6, PA66, PA666, PA610, PA612), PLA, PLGA, ABS, SAN, ASA, SB, PS, PE-LD, PE-LLD, PE-HD, PE-UHMW, PP, PB, PIB, PBT, PET, PETG, PC, PMMA, POM sowie thermoplastische Elastomere (TPE) und thermoplastische Polyurthane (TPU), deren Dry-Blends, Polymerblends und/oder deren Verbindungen basieren. Als Additive für die Verbesserung gelten Vernetzer für eine bessere Anhaftung an die Faser, Flammschutzmittel, Farb- und Effektpigmente sowie Additive zur Verbesserung der elektrischen und thermischen Leitfähigkeit. Als Fasern werden Kohlenstoff-, Glas-, Basalt-, Aramid-, Kevlar, Lignin-, Flachs-, Hanf-, Sisal-, Jute- und/oder Holzfasern verwendet. Die Fasern können als einzelne Filamente in die Düse gefördert werden, sowie mehrere Filamente gleichzeitig, um die Ausstoßmenge zu erhöhen und Kombinationen aus den genannten Fasern zu erzeugen. Außerdem können zu den Endlosfilamenten auch ein fadenförmiger Sensor oder unverstärkte Thermoplaste zur Erhöhung des Matrixanteils eingefügt werden, siehe auch Fig. 9.

Die Anbindung zwischen Faser und Matrix wird durch die Faseroberfläche und dem Sizing verbessert. Die Faseroberfläche wird häufig durch Oxidation aktiviert, was durch Säurebäder, Plasma oder ähnlichen Prozessen durchgeführt werden kann. Das Sizing ist eine Schutzschicht für die Verarbeitungsprozesse, um die Fasern nicht zu zerstören. Die Zusammensetzung des Sizings ermöglicht auch eine bessere Faser-Matrix-Anbindung. Ein Epoxidharzsizing bindet gut an ein Epoxidharz an, die Anbindung kann sich aber durch Degradation bzw. Zersetzung bei hohen Temperaturen wie der Verarbeitungstemperatur bei thermoplastischen Polymeren verringern. Daher werden spezielle Sizings für Thermoplaste kommerziell angeboten.

Der Kunststoff bzw. das Polymer kann z. B. aus Harz und/oder Härter bestehen. Es können sowohl Kondensationsharze als auch Reaktionsharze verwendet werden. Im Unterschied zu Ersterem erfolgt die Polymerisation oder Polyaddition allein durch aushärten. Dadurch kann vorteilhafterweis eine Schädigung der Gesundheit von bei der Herstellung beteiligten Personen vermieden werden.

Unter Härter sind bevorzugt Materialien zu verstehen, die insbesondere gemeinsam mit dem verwendeten Harz zu einer Aushärtung zu einem festen Stoff, in erster Linie zu einem festen Kunststoff, führen. Härter sind bevorzugt ausgewählt aus der Gruppe umfassend Polyamine, Aminaddukte, Polyaminoamide, Ketimine, Polyisocyanate, blockierte Isocyanate, Cyanguanidin, Amidine, Anhydride von Dicarbonsäuren, Carboxygruppen-haltige Polyesterharze, Dicarbonsäuren, Aldehyde, Ketone und/oder Divinylbenzole, Diallylphthalat und/oder Triglycidylisocyanurat. Vorteilhafterweise haben die genannten Härter gute mechanische Eigenschaften sowie eine gute Temperatur- und Chemikalienbeständigkeit und gelten als hochwertig. Sie werden u. a. als Einbettmittel in der Metallographie und als Formmassen für Komponenten in der Elektrotechnik und Elektronik verwendet.

Durch den Zuführungskanal wird bevorzugt das Filament durch den Druckkopf transportiert. Der Zuführungskanal kann dabei in einem einfachen Fall eine röhrenartige Aussparung (Volumen) sein, welche im Wesentlichen gerade zum Heizblock des Druckkopfes führt. Der Zuführungskanal kann auch ein Schlauch oder eine schlauchförmige Hülle umfassen, durch die das Filament geleitet und geführt wird. Dabei ist es bevorzugt, dass der Zuführungskanal ein Schlauch umfassend PTFE (Polytetrafluorethylen) ist, um das zu druckende Material zu schützen und beim Schnitt durch die Schneideeinheit Materialbelastung nur an der Schnittkante auszuüben. PTFE ist vorteilhafterweise sehr reaktionsträge. Damit kann eine hohe Vielzahl an Materialien als Filament eingesetzt werden. Den meisten Substanzen gelingt es vorteilhafterweise nicht, die Bindungen des PTFE aufzubrechen und mit PTFE chemisch zu reagieren. Zudem hat PTFE einen sehr geringen Reibungskoeffizienten, was für die Zuführung bzw. den Fließvorgang des Filaments in den Heizblock vorteilhaft ist. Außerdem ist bei PTFE die Haftreibung genauso groß wie die Gleitreibung, so dass der Übergang vom Stillstand zur Bewegung ohne Ruck stattfindet. Des Weiteren hat PTFE eine niedrige Oberflächenspannung, sodass kaum Materialien an PTFE haften bleiben, was für den Fluss des Filaments durch den Zuführungskanal von großem Vorteil ist. Darüber hinaus hat PTFE eine Schmelztemperatur von ca. 327°C, mit einer typenabhängigen Einsatztemperatur von ca. 250°C oder mehr, sodass sich PTFE für den Übergang des Filaments in den Heizblock besonders gut eignet. Analog können für den Begriff "Zuführungskanal" auch die Ausdrücke "Zuführkanal", "Führungskanal", "Förderkanal" oder "Führungsschlauch" verwendet werden.

Begriffe wie im Wesentlichen, ca. etc. beschreiben bevorzugt einen Toleranzbereich von weniger als ± 40 %, bevorzugt weniger als ± 20 %, besonders bevorzugt weniger als ± 10 %, noch stärker bevorzugt weniger als ± 5 % und insbesondere weniger als ± 1 % und umfassen insbesondere den exakten Wert. Ähnlich beschreibt bevorzugt Größen, die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

Das Filament ist der Werkstoff, mit dem der 3D-Druck erfolgt und womit die Bauteile letztendlich hergestellt werden. Es handelt sich bevorzugt um ein Kunststoff-Polymer, wie beispielsweise Polylactide (PLA), Acrylnitril-Butadien-Styrol-Copolymere (ABS) und/oder mit Glykol modifiziertes Polyethylenterephthalat (PET, mit Glykol PETG). Dieses wird unter hohen Temperaturen geschmolzen, insbesondere im Heizblock des Druckkopfes. Hierbei bezeichnen hohe Temperaturen solche Temperaturen, die oberhalb der Raumtemperatur und im Wesentlichen bei einer Schmelztemperatur des Filaments vorliegen. Insbesondere müssen solche Temperaturen im Heizblock vorliegen. Das Filament liegt bevorzugt in länglicher Form, z. B. in Drahtform und/oder auf Rollen konfektioniert vor. Beispielsweise kann das Filament auf einer Spule aufgerollt und über eine einfache Mechanik dem Zuführkanal zugeführt werden. Vorzugsweise wird das Filament durch einen Antrieb bewegt und/oder zugeführt, z. B. einem Schritt-Motor. Das Filament entscheidet wesentlich über die Eigenschaften des 3D-Druckes. Wenn im Folgenden beschrieben wird, dass Material geschnitten und/oder geschert wird, ist damit bevorzugt das Filament gemeint. Insbesondere betrifft der Schnitt durch die erfindungsgemäße Schneideeinheit endlosfaserverstärkte Filamente, ist darauf jedoch nicht beschränkt. Es ist nicht üblich, unverstärkte oder nur mit Kurzfasern versehene Filamente mit der Schneideeinheit zu schneiden und/oder zu scheren, da hierbei durch ein Retract der Schmelzstrang getrennt werden kann, wenn die Düse mit hoher Geschwindigkeit zur nächsten Position fährt. Ein Trennen über den Retract ist allerdings bei einer großen Anzahl an Fasern, insbesondere bei endlosfaserverstärkten Filamenten, nicht mehr möglich, da die Zugfestigkeit des Materials zu groß ist (siehe hierzu auch die Ausführungen auf S. 2). Im Kontext des Druckprozesses werden die Formulierungen "Material" und "Filament" analog verwendet.

Der Heizblock ist ein festes Bauteil des Druckkopfes und bezeichnet den Bereich, in dem das Filament bis auf die Schmelztemperatur erhitzt wird. Die Temperaturen liegen je nach Material im Wesentlichen zwischen ca. 100°C und ca. 500°C. Vorzugsweise ist durch den Heizblock die erhöhte Temperatur zum Schmelzen des Filaments homogen verteilt. Meistens ist der Heizblock aus Aluminium gefertigt. Aber auch andere Materialien können in Frage kommen, wie beispielsweise Messing, Stahl, Bronze, Kupfer und/oder Titan. Es kann auch bevorzugt sein, dass sich eine oder mehrere Heizpatronen und/oder Temperatursensoren am Heizblock befinden. Zudem ist es auch bevorzugt, dass der Heizblock für die Aufnahme der Heizpatrone, des Temperatursensors, der Düse und eines Heatbreaks ausgestaltet ist. Die Heizpatrone versorgt den Heizblock mit einer erhöhten Temperatur, sodass das Filament innerhalb des Heizblocks schmilzt. Mit dem Temperatursensor kann die Temperatur des Heizblocks überwacht und an eine Recheneinheit übermittelt werden. Es ist im Stand der Technik üblich, den Temperatursensor und die Heizpatrone im Heizblock zu verklemmen, festzuschrauben oder mit hitzebeständigem Kleber oder Silikon zu verkleben. Solche Möglichkeiten der Anbringung dieser Komponenten liegen im Kenntnisbereich eines durchschnittlichen Fachmanns. Der Heatbreak bezeichnet bevorzugt den Bereich, der den Heizblock mit einem Kühlkörper, der vorzugsweise auch angebracht werden kann, verbindet. Der Heatbreak unterbricht bevorzugt die Wärmeübertragung des Heizblocks an den Kühlkörper, um vorteilhafterweise einen möglichst geringen Wärmeverlust zu haben. Dies wird dadurch erreicht, dass die Wandstärke deutlich minimiert wird und somit eine geringere Querschnittsfläche für die Wärmeübertragung zur Verfügung steht. Auch werden Materialien mit einer geringeren Wärmeleitfähigkeit (z. B. Titan oder Keramik) für diesen Bereich verwendet, um die Wärmeleitung zu reduzieren. Im Bereich des Heatbreaks erfolgt bevorzugt der Übergang zwischen der festen und der flüssigen Phase des Filaments. Es ist bevorzugt, dass die Temperatur im gekühlten Bereich, insbesondere im Bereich des Kühlkörpers, wenn möglich, unterhalb der Glasübergangstemperatur bzw. der materialtypischen Temperatur liegt, um plastische Verformung zu vermeiden. Unterhalb der Glasübergangstemperatur sind amorphe Thermoplaste fest, darüber werden sie thermoelastisch und dann thermoplastisch. Insbesondere bedeutet das, dass oberhalb der Glasübergangstemperatur sich diese Materialien verformen und für ein Verstopfen des Druckkopfes sorgen können. Bei teilkristallinen Kunststoffen gibt es einen ähnlichen Temperaturbereich, der jedoch deutlich näher am Schmelzpunkt liegt und sehr unterschiedlich im Stand der Technik definiert ist. Insgesamt muss das Filament soweit heruntergekühlt werden, dass keine Verformung stattfindet, da sonst der Druck zur Materialförderung zu groß wird.

Die Düse dient bevorzugt zur kontrollierten Ablage des Faserverbundwerkstoffes auf das Druckbett. Eine Düse umfasst bevorzugt eine Öffnung in Richtung Druckbett für das zu verdruckende Material. Insbesondere kann die Düse einen sich verengenden Austrittsquerschnitt für den zu verdruckenden Thermoplast aufweisen. Bei einem Faserverbund mit endlosen Kohlenstofffasern, ist keine Querschnittsverjüngung möglich, da das Material sich nicht plastisch im Querschnitt ändern lässt, ohne dass die Fasern einen Schaden durch Stauchung oder Längung erleiden. Es ist möglich, dass der Düsenquerschnitt bei endlosfaserverstärkten Verbundwerkstoffen größer ist als die interne Führung durch den Zuführungskanal, da durch das Umformen des Querschnitts von rund (Durchmesser von z. B. 0,7 mm) in eine breite Ellipse oder ein breites Rechteck mit abgerundeten Ecken (Lagenhöhe von z. B. 0,2 mm und Breite von 1,7 mm der Druckbahn) eine zusätzliche Belastung auf die Fasern vermieden werden muss. Die Düseninnenkannte kann abgerundet sein (typischerweise ca. 0,5 mm - ca. 1 mm Radius), um ein Reißen oder Aufreiben des Faserstranges zu vermeiden. Die Düsenspitze muss selbst nicht spitz ausgebildet sein, sondern kann auch durch eine senkrechte Fläche zum Führungskanal versehen sein, mit der der Faserverbund auf der Oberfläche angepresst wird und eine Wärmeübertragung möglich ist. Die Außenkante der Düse kann scharfkantig oder abgerundet sein. Letzteres wird häufig bevorzugt eingesetzt, um die Oberfläche des abgelegten Faserverbundstranges nicht zu beschädigen oder aufzurauen.

Ein sich verengender Austrittsquerschnitt bei unverstärkten oder kurzfaserverstärkten Filamenten ist dahingehend von Vorteil, dass das Material gezielter verdruckt werden kann und damit Muster, Einkerbungen, Formen etc. systematischer auf oder in das Bauteil angebracht werden können. Ein größerer Durchmesser von z. B. 1,75 mm oder 2,85 mm lässt sich deutlich einfacher aufgrund der Toleranzen herstellen. Außerdem lässt sich das Filament so einfacher in den Druckkopf mit Hilfe einer Fördereinheit, auch Extruder genannt, in die beheizte Düse führen.

Die Düse kann auch bevorzugt in dem Heizblock als eine Öffnung ausgebildet sein. Die Öffnung kann einen runden, kantigen, sich verjüngenden und/oder einen sich erweiternden Querschnitt haben. Ein sich erweiternder Querschnitt ist vorteilhaft, da das Material großflächiger auf das Druckbett aufgetragen werden kann. Runde und kantige Austrittsquerschnitte erlauben vorteilhafterweise eine Formgebung des Materials direkt beim Austritt aus der Düse. Dadurch kann sich vorteilhafterweise das Anbringen von Mustern beschleunigen, da auf eine hohe Verweildauer der Düse über eine bestimmte Position verzichtet werden kann. Die Düse kann also bevorzugt als Öffnung, beispielsweise als Bohrung, in dem Heizblock vorliegen. Auf diese Weise kann ein besonders kompakter Druckkopf bereitgestellt werden. Vorteilhafterweise kann darauf verzichtet werden, während des Aufbaus des Druckkopfes ein zusätzliches Bauteil als Düse anzubringen. Insbesondere muss beim Einbau einer Düse als zusätzliche Komponente darauf geachtet werden, dass das Düsenmaterial bei den Temperaturen des Heizblocks beständig ist. Solche Berücksichtigungen werden bei der Einbringung einer Öffnung als Düse in den Heizblock vorteilhafterweise nicht benötigt. Somit ist der Aufbau und die Konstruktion dieser Ausführungsform zeit-, energie- und kostensparend.

Es kann auch bevorzugt sein, dass die Düse als zusätzliches Bauteil in den Heizblock integriert wird und zum Abgeben des Materials auf das Druckbett dient. Eine Düse als Abgabebereich, welche zum Verdrucken an eine Druckfläche angenähert wird bzw. sich dort befindet, hat sich zum FMD-/FFF-Drucken als besonders geeignet herausgestellt. Die Düse und/oder das Druckbett sind vorzugsweise dazu konfiguriert, eine Relativbewegung zwischen Düse und Druckbett zu ermöglichen. Dies kann insbesondere in alle Raumrichtungen erfolgen. Eine Relativbewegung kann dabei vorzugsweise sowohl durch eine Bewegung der Düse als auch durch eine Bewegung des Druckbetts und insbesondere durch eine Bewegung beider Elemente zueinander erzielt werden. Die möglichen Raumrichtungen umfassen dabei bevorzugt neben translatorischen Freiheitsgraden ebenso rotatorische bzw. rotationelle Freiheitsgrade. Hierdurch kann ein Verdrucken komplexer, dreidimensionaler Bauteile ermöglicht werden. Ein Freiheitsgrad bezeichnet die Zahl der voneinander unabhängigen und damit frei wählbaren Bewegungsmöglichkeiten entlang einer Raumrichtung. Eine Raumrichtung bezeichnet insbesondere eine Koordinatenachse eines dreidimensionalen Raumes und umfasst daher insbesondere x-, y- und/oder z-Achse.

Insbesondere umfasst die Düse einen Ausgang und einen Eingang. Der Ausgang der Düse umfasst den Bereich der Düse, in der das zu druckende Material, also das geschmolzene Filament, in die Düse gelangt. Der Ausgang kann auch als Düsenaußenkante bezeichnet werden. Der Eingang der Düse umfasst den Bereich der Düse, durch die das Material geführt wird, um schließlich auf das Druckbett zu gelangen. Der Ein- und der Ausgang der Düse sind insbesondere funktionell definiert. Ein durchschnittlicher Fachmann ist in der Lage, diese entsprechend zuzuordnen und/oder diese Bereiche anders zu bezeichnen.

Die Schneideeinheit ist bevorzugt ein Schneidewerkzeug für eine Zuschneidung und/oder Zerschneidung des Faserverbundwerkstoffs. Die Schneideeinheit kann in Richtung des Filaments bewegt werden, sodass das Filament an einer gewünschten Stelle und/oder einem gewünschten Bereich durchtrennt wird, vorzugsweise in Querrichtung. Vorteilhafterweise ist es durch die Schneideeinheit möglich, z. B. in einer Schicht mehrere verstärkte Bereiche einzufügen, zwei Bauteile ohne direkte Verbindung zu drucken oder auch Sollbruchstellen einzufügen. Vorteilhafterweise ist es mit der Schneideeinheit möglich, eine Fertigung komplexer Bauteile, z. B. mit lokalen Verstärkungen, zu bewerkstelligen.

Die Schneideeinheit schneidet und/oder schert bevorzugt das Filament, bevor es auf das Druckbett bedruckt wird. Hierfür übt die Schneideeinheit vorzugsweise eine Scherung aus, sodass eine Scherbewegung des Materials hieraus resultiert. Hierzu wird eine Kraft in Querrichtung ausgeübt. Die Bewegung der Schneideeinheit kann hierzu linear durch eine axiale Bewegung oder durch eine Drehbewegung, beispielsweise durch eine Drehwalze, erfolgen. Es kann auch bevorzugt sein, dass für einen Schnitt des zu druckenden Materials der gesamte Druckkopf oder der Zuführkanal, der Heizblock und die Düse (im Wesentlichen gesamtheitlich) eine Rotationsbewegung durchführt, um das Material abzuscheren.

Das Schneiden des Materials bezeichnet bevorzugt das Trennen eines Stücks vom restlichen Material. Eine Scherung bezeichnet das Einwirken einer Kraft oder eines Kräftepaars parallel zur bezogenen Fläche auf das Material, sodass es zu einer Verformung mit weiteren Spannungskomponenten kommt. Der Ausdruck Scherkraft oder Schubkraft ist hierbei üblich. Das Kräftepaar kann aus der Wirkung eines versetzt angeordneten Kräftepaars entstehen, das auf das Material wirkt und zu einer Verzerrung (Schubverzerrung) des zwischen den Kräften liegenden Bereichs führt. Das Kräftepaar umfasst zwei Kräfte, die in entgegengesetzten Richtungen wirken und zueinander parallel sind. Insbesondere kann durch das Scheren des Materials ein Schnitt resultieren. Das Kräftepaar kann auch durch ein auf das Material wirkendes Moment (Drehmoment) hervorgerufen werden.

Das Druckbett bezeichnet die Druckfläche, auf der das Material für die Herstellung des Bauteils abgelegt und somit bedruckt wird. Vorzugsweise ist das Druckbett eine Bauteilplattform und als ebene Fläche ausgestaltet. Für andere Anwendungsbereiche kann das Druckbett auch Einkerbungen und/oder Abdruckmodelle aufweisen, um gewünschte Formen einfacher zu ermöglichen. Es kann auch bevorzugt sein, dass das Druckbett beheizt wird. Ebenfalls ist es bevorzugt, dass das Druckbett Segmente aufweist und diese unterschiedlich beheizt werden. Vorteilhafterweise können sich bereits bedruckte Schichten schneller und besser mit dem neu zu druckendem Material verbinden, da sie eine annähernd ähnliche Temperatur aufweisen. Andernfalls würde das bereits bedruckte Material zu schnell erhärten und es bestünde die Gefahr, dass bereits bedruckte Schichten beschädigt werden könnten. Vorteilhafterweise wird dies durch die Anpassung der Temperatur zwischen dem zu druckenden Material und dem Druckbett umgangen.

Solche Vorkehrungen liegen im Kenntnisbereich eines durchschnittlichen Fachmanns und können je nach Anwendungsfall und Verwendungszweck beliebig angepasst und optimiert werden.

In einer weiteren bevorzugten Ausführungsform ist der Druckkopf dadurch gekennzeichnet, dass sich die Schneideeinheit innerhalb eines Abstandes S zum Ausgang der Düse befindet, wobei S zwischen im Wesentlichen 0 und 100 mm liegt, bevorzugt bis zu 10 mm, besonders bevorzugt bei 1 mm.

Der bevorzugte Abstand bis zu ca. 10 mm und der besonders bevorzugte Abstand bei ca. 1 mm ist dahingehend von Vorteil, dass im Slicer nur ein geringer Abstand zwischen dem Ausgang der Düse und der Schneideeinheit berücksichtigt werden muss. Insbesondere gilt dies bei einem Abstand von ca. 1 mm, da der Schneidevorgang direkt am Bahnende erfolgt. Eine Bahn bezeichnet im Sinne der Erfindung den Weg, entlang der das Filament bis zur Düse gelangt. Das Bahnende bezeichnet im Wesentlichen den Bereich der Düsenaußenkante und damit den Ausgang der Düse. Durch den geringen Abstand zwischen der Düsenaußenkante und der Schneideeinheit werden rechenintensive Schritte im Slicer, die den Abstand zwischen Düsenaußenkante und Schneidekante benötigen, vereinfacht und beschleunigt. Dies wirkt sich auch vorteilhaft auf den gesamten Druckprozess aus, sodass der Druckprozess in ihrer gesamtheitlichen Betrachtung schneller verrichtet wird.

Die genannten Abstände haben sich als besonders vorteilhaft erwiesen, um einen optimalen Schnitt des Filaments zu ermöglichen, wobei sich hierzu die Schneideeinheit innerhalb des Heizblocks befindet. Je nach Anwendungsfall und Wahl des Heizblocks kann er unterschiedliche Ausmaße haben, beispielsweise eine Höhe von ca. 100 mm, ca. 50 mm, ca. 20 mm, ca. 10 mm oder kleiner. Daher ist es für die Erfindung essenziell, dass der Abstand S, der Abstand zwischen Ausgang der Düse bzw. Düsenaußenkante und der Schneideeinheit, geringer ist als die Ausmaße, bevorzugt geringer als die Höhe des Heizblocks. Das liegt daran, dass erfindungsgemäß die Schneideeinheit innerhalb des Heizblocks integriert werden soll.

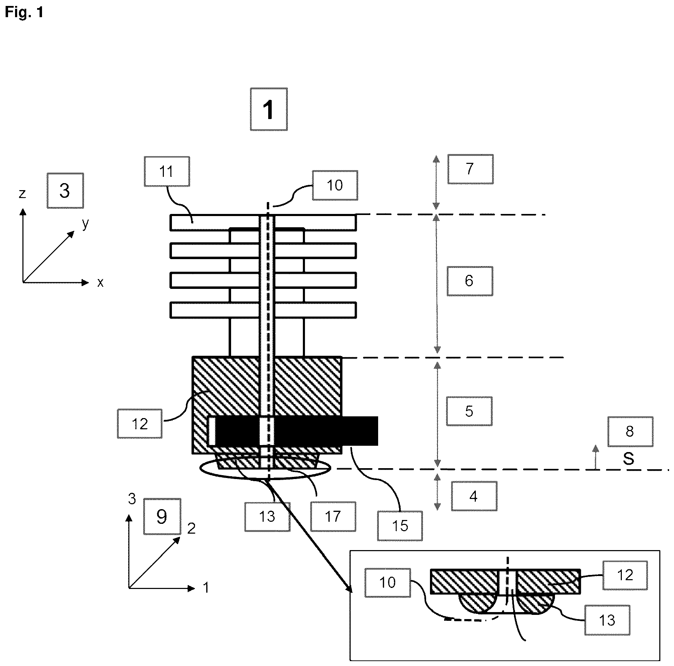

Der Abstand S (siehe Fig. 1, Bezugszeichen 8 bzw. Parameter S) sollte bevorzugt positiv und nicht negativ sein, also nicht weniger als 0 mm, z. B. -0,5 mm, betragen im Bezugssystem der Erfindung. Hätte S einen negativen Wert, so befände sich die Schneideeinheit außerhalb der Düse und ein Schnitt würde erst nach dem Austritt des Materials aus der Düse erfolgen. Von den Erfindern wurde allerdings erkannt, dass eine solche Position das Schneiden des Filaments erschwert, da das Filament nach dem Austritt aus der Düse bereits etwas ausgehärtet ist. Gleichzeitig darf der Abstand S die Ausmaße des Heizblocks nicht übersteigen, da sich sonst die Schneideeinheit nicht mehr innerhalb des Heizblocks befinden würde. Dies würde zu dem Problem führen, dass sich die Schneideeinheit im Bereich des Heatbreaks oder sogar im Kühlkörper befinden würde. In diesem Bereich würde die Erfindung nicht funktionieren, da der erfindungswesentliche Gedanke, nämlich die Platzierung der Schneideeinheit innerhalb des Heizblocks, nicht umgesetzt wäre. Tatsächlich erreicht das Filament außerhalb des Heizblocks nicht die Schmelztemperatur, wodurch das Filament eine relativ hohe Härte aufweist, die den Schnitt und/oder die Scherung durch die Schneideeinheit erschwert.

Es kann ebenfalls bevorzugt sein, dass der Abstand ca. S=0 ist. Der Abstand ca. S=0 bedeutet, dass die Schneideeinheit, genau genommen eine Schneidekante der Schneideeinheit, sich im Wesentlichen in einer identischen Position mit dem Ausgang der Düse befindet. Somit wird ein Schnitt des Filaments am Ende der abgelegten Bahn ermöglicht. Insbesondere wird die Schneideeinheit selbst beheizt, da sie sich innerhalb des Heizblocks befindet. Vorteilhafterweise muss deutlich weniger Kraft aufgewendet werden, um das Filament zu schneiden und/oder abzuscheren. Einerseits begründet sich dies damit, dass das Filament innerhalb des Heizblocks durch die erhöhte Temperatur in die flüssige oder zähflüssige oder pastöse Phase gebracht wird. Andererseits ist auch die Temperatur der Schneideeinheit selbst erhöht, da sie sich innerhalb des Heizblocks befindet und durch die Wärmeübertragung ebenfalls eine ähnlich hohe Temperatur wie der Heizblock aufweist. Durch die Kombination der flüssigen Phase innerhalb des Heizblocks mit der erhöhten Temperatur der Schneideeinheit selbst war es überraschend, dass erheblich weniger Kraft für den Schnitt erforderlich war, als man es in der Summe dieser begünstigten Faktoren einzeln erwartet hätte.

In einer weiteren bevorzugten Ausführungsform ist der Druckkopf dadurch gekennzeichnet, dass die Schneideeinheit eine oder mehrere axial bewegbare Schneideplatten oder eine Drehwalze umfasst. Der Schneidevorgang geschieht bevorzugt durch eine axiale Bewegung oder eine Drehbewegung der Schneideeinheit. Durch die Axialbewegung erfolgt eine angreifende Last auf das Material und verursacht eine Radialbelastung auf das endlosfaserverstärkte Filament. Dies führt zu inneren Beanspruchungen des Materials in radialer Richtung bzw. mit radialer Komponente. Die dadurch resultierenden Normalspannungen, insbesondere Zug- und Druckspannungen, wirken vorteilhafterweise gezielt in jeweilige Querschnitte des Materials. Eine Drehbewegung der Schneideeinheit ist ebenso vorteilhaft, da das bedruckte Material und damit das hergestellte Bauteil hinsichtlich Abmessungen, Formen und Rauheit präzise bearbeitet werden kann.

Bei einer axialen Bewegung wird die Schneideplatte bevorzugt linear bewegt. Dabei wird eine erste Schneidekante auf eine zweite Schneidekante zubewegt. Es kann auch bevorzugt sein, dass die zweite Schneidekante auf die erste Schneidekante zubewegt wird. Weiterhin ist es bevorzugt, dass sich beide Schneidekanten aufeinander zubewegen. In der zuletzt genannten Variante ist es besonders bevorzugt, dass beide Schneidekanten gegenläufig oder eine Schneidekante sich schneller als die andere bewegt. Dadurch überlappen sich beide Schneidekanten und ein Schnitt und/oder eine Scherung des Materials wird möglich.

Als linear bewegbare Platten können alle möglichen Materialien in Frage kommen, die eine weitaus höhere Schmelztemperatur haben als die Temperatur, die innerhalb des Heizblocks vorliegt. Auch kann das Material gehärtet sein bzw. mit harten, verschleißschützenden oder gleitenden Beschichtungen versehen sein, um die Trennkräfte zu verringern.

Weiterhin kann die Schneideeinheit als Drehwalze ausgestaltet sein. Hierfür wird das Filament durch den Zuführkanal in den Heizblock befördert, in dem sich die Drehwalze befindet. Der Zuführkanal kann auch vorzugsweise das Filament in die Drehwalze hineinführen. Auch die Drehwalze umfasst eine oder mehrere Schneidekanten. Durch eine Rotationsbewegung bzw. Drehbewegung der Drehwalze lässt sich der Ausgang der Düse verschließen, sodass ein Abschneiden und/oder ein Abscheren des Filaments ermöglicht wird.

Auch für die Drehwalze sind Materialien einsatzfähig, die nicht bei der Temperatur, die im Heizblock vorliegt, schmelzen. Beispielsweise können hierfür Metalle eingesetzt werden, wie Wolfram, Molybdän, Tantal, Titan, Niob, Stahl, Eisen, Messing, Bronze, Aluminium, Kupfer, deren Verbindungen und/oder Legierungen. Auch Keramiken können als Material für die Drehwalze eingebracht werden, wie beispielsweise Aluminiumoxid, Zirkonoxid, Siliziumnitrid, Aluminiumnitrid, Siliziumcarbid, Cordierit, Mullit, Steatit, Calciumoxid, Magnesiumoxid, Sialon, Pyrex, Tempax, Neoceram, Quarz, Baycol, Saphirglas, Ziegel, deren Verbindungen und/oder Legierungen. Die genannten Materialien für die Schneideeinheit und/oder der Drehwalze sind besonders vorteilhaft, da insbesondere die Schneidekanten ihre Schärfe über einen langen Zeitraum behalten. Die Schärfe kann außerdem durch Prozesse wie Härten und/oder Vergüten, mit einer Verschleißschutzschicht und/oder einer Gleitschicht verbessert und die Nutzungszeit verlängert werden. Aus produktionstechnischer Sicht ist dies auch von großem Vorteil, da auf einen häufigen Wechsel der Schneideeinheit verzichtet werden kann.

Der Durchmesser der Drehwalze hat sich als wichtiger Parameter für den Schneidevorgang herausgestellt. Ein kleiner Drehwalzendurchmesser verringert insbesondere die Heizblockgröße, führt aber zu großen Drehwinkeln. Der Drehwalzendurchmesser verändert nicht die Schneidelänge, da immer nur an der düsennahen Kante geschnitten wird. Die Restauszugslänge wird durch den Abstand zwischen Düsenkante und Schneidekante definiert. Bei kleinen Walzendurchmessern muss die Walze aber weitergedreht werden, sodass der offene Kanal verschlossen werden kann. Der Drehwinkel bei kleineren Walzendurchmessern nimmt daher stark zu. Größere Drehwalzendurchmesser führen zu kleineren Drehwinkeln, die benötigt werden, um einen Schnitt des Filaments zu bewirken. Daher ist es bevorzugt, dass der Drehwalzendurchmesser bis zu ca. 100 mm, besonders bevorzugt bis zu ca. 50 mm, ganz besonders bevorzugt bis zu ca.10 mm beträgt. Ein Durchmesser von ca. 10 mm stellt vorteilhafterweise einen guten Kompromiss dar zwischen der Größe des Heizblocks und des aufzuwendenden Drehwinkels, die bevorzugt ca. zwischen 15° und 30° liegen soll. Drehwinkel zwischen 10° und 45° sind durch die Drehwalze ebenfalls möglich. In einigen Anwendungsbereichen sind Drehwinkel zwischen -90° und +90° möglich. Auch kleinere Drehwalzendurchmesser bis zu ca. 4 mm sind denkbar, wobei darauf geachtet werden muss, dass bei zu kleinen Drehwalzendurchmessern nicht zu wenig Wandstärke an der Drehwalze als Schneidekante vorhanden ist. Dies ist abhängig vom Innendurchmesser des Zuführungskanals, der beispielsweise ca. 1 mm betragen kann. Wenn der Innendurchmesser des Führungskanals verkleinert wird, kann der Drehwalzendurchmesser auf ca. 2 mm verringert werden. Vorteilhafterweise muss für das Erreichen dieser Drehwinkel die Schneideeinheit mit wenig Kraft in Bewegung versetzt werden. Zudem sind die angegebenen Winkel vorteilhafterweise ausreichend, um den Ausgang der Düse zu verschließen. Durch einen Verschluss des Ausgangs der Düse erfolgt ein "vollständiger" Schnitt, d. h. das Material wird durchtrennt. Hierdurch kann ein Bedrucken des Materials kurzzeitig gestoppt werden. Beispielsweise kann das relevant sein, wenn der Druck in einer bestimmten Position aufhören und der Druckkopf seine Position wechseln soll. In dieser Zwischenzeit des Positionswechsels sollte kein Material aus der Düse auf das Druckbett gelangen. Dies wird vorteilhafterweise dadurch ermöglicht, dass durch die angegebenen Winkel die Drehwalze den Ausgang der Düse verschließen kann. Gleichzeitig ist es möglich, nur einen Teil des Materials durch die angegebenen Winkel zu scheren, beispielsweise um bestimmte Muster und/oder Formen auf das Druckbett zu bekommen.

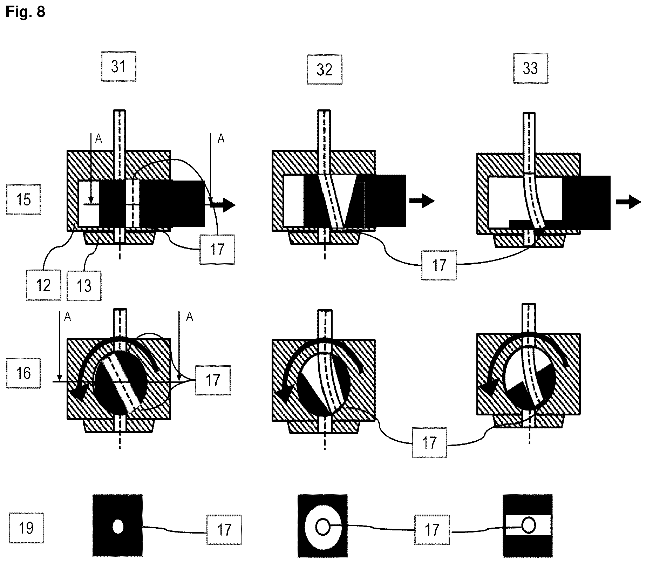

Der Drehwalzendurchmesser ist auch abhängig von dem Durchmesser des Ausgangs der Düse. Vorzugsweise wird dazu in der Drehwalze selbst eine Bohrung eingefügt. Diese Bohrung ist bevorzugt kegelförmig. Beispielsweise kann die kegelförmige Bohrung einen Durchmesser von ca. 1 mm haben. Mit einer kegelförmigen Bohrung bildet sich damit vorteilhafterweise ein Absatz von ca. 1 mm zwischen der Düse und der Drehwalze. Der entstandene Absatz ist dahingehend von Vorteil, dass eine Schneidekante der Drehwalze nicht in Kontakt mit dem Zuführkanal tritt. Am Ende dieses Absatzes wird an der Schneidekante zwischen der Drehwalze und der Düse das Material geschnitten und/oder geschert. Erfindungsgemäß wurde erkannt, dass eine "gerade" Bohrung in die Drehwalze nicht vorteilhaft ist, da durch die Drehbewegung der Drehwalze der Zuführkanal geschert werden könnte, was im Falle eines PTFE-Schlauchs als Zuführkanal nachteilig wäre. Der PTFE-Schlauch könnte sonst durch die Scherung über die mechanische Belastung beschädigt werden. Die Lösung für das Problem ist die kegelförmige Bohrung in die Drehwalze und/oder eine Nut, sodass die der Schneidekante gegenüberliegende Kante zwischen Heizblock und Drehwalze den Schlauch oder das endlosfaserverstärkte Filament nicht berühren (siehe hierzu Fig. 8 und die dazugehörige Beschreibung). Damit wird vorteilhafterweise nur das Material bzw. das Filament abgetrennt und es kommt zu keiner Berührung zwischen Kante und Zuführkanal.

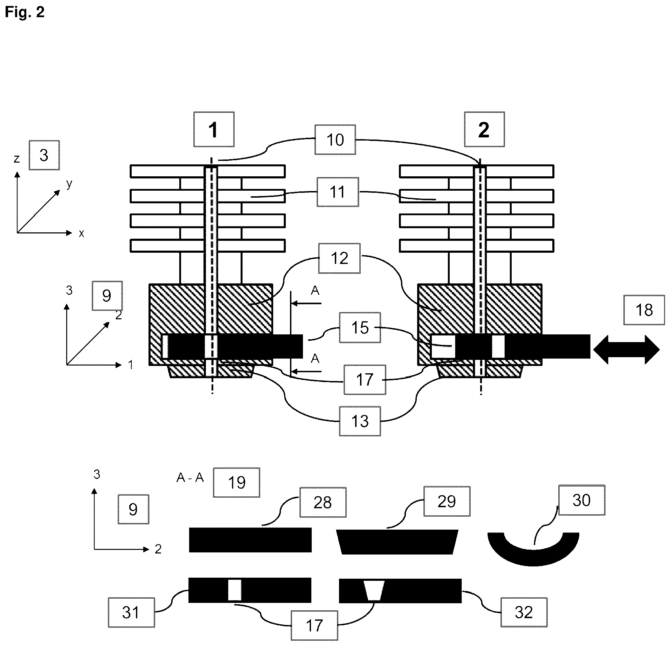

In einer weiteren bevorzugten Ausführungsform ist der Druckkopf dadurch gekennzeichnet, dass die Schneideeinheit eine Schneidebohrung umfasst und die Schneideeinheit als axial bewegbare Platte einen rechteckigen, trapezförmigen, kegelförmigen oder halbkreisförmigen Querschnitt aufweist, wobei durch eine Bewegung der Schneideeinheit der Ausgang der Düse verschlossen werden kann (siehe hierzu auch Fig. 2). Hierzu muss die Schneideplatte radial zum Filament durch eine axiale Verschiebung bewegt werden. Eine axiale Bewegung meint bevorzugt eine Bewegung entlang einer Achse, der Bewegungsachse. Bei einer Drehbewegung wir eine Drehung um eine Achse durchgeführt. Die Bewegungsachse bei der axialen Bewegung muss radial zum Filament erfolgen bzw. mit radialem Anteil, da bei einer zum Filament axial orientierten Bewegung die Schneidekante das Filament spalten würde. Insbesondere erfolgt der Schnitt senkrecht zur Mittellinie des Filaments und somit in radialer Richtung, wenn man den Querschnitt des Filaments als Kreis annimmt. Würde man einen Axialschnitt durchführen, würde man senkrecht zur Kreisfläche schneiden und das Filament spalten und nicht schneiden.

Die Querschnittsformen der axial bewegbaren Platte als rechteckig, trapezförmig oder kreisförmig haben sich dahingehend als vorteilhaft erwiesen, dass das Filament besonders gut und einfach durch die Schneidebohrung der axial bewegbaren Platte hindurchgeführt werden kann.

Als axial bewegbare Platte wird die Platte linear entlang einer Achse (axial) in Querrichtung bewegt, um das Filament innerhalb des Heizblocks zu schneiden. Bei der Bewegung der axial bewegbaren Platte kann der Ausgang der Düse geöffnet und/oder geschlossen werden. Durch das Verschließen des Ausgangs der Düse wird das Material geschnitten und/oder geschert. Dies ist durch die Platzierung innerhalb des Heizblocks besonders vorteilhaft, da durch die erhöhte Temperatur innerhalb des Heizblock das Filament zum Schmelzen gebracht wird. Dadurch wird überraschend wenig Kraft für die axial bewegbare Platte benötigt, um das Material zu schneiden und/oder abzuscheren.

Die Schneidebohrung kann in Form einer üblichen Bohrung vorliegen oder kegelförmig in die axial bewegbare Platte angebracht werden. Bei der Bohrung sollte berücksichtigt werden, dass das Material lediglich an den Schneidekanten, aber nicht beim Eintritt in die axial bewegbare Platte geschnitten wird. Daher ist die kegelförmige Bohrung auch bei der axial bewegbaren Platte als Schneideeinheit besonders bevorzugt. Durch die kegelförmige Bohrung (siehe Fig. 2) wird vorteilhafterweise vermieden, dass ein Schnitt am Eintritt durch die axial bewegbare Platte erfolgt, da eine obere Kante der axial bewegbaren Platte das Material nicht berührt. Auch in der Ausführungsform der Schneideeinheit als axial bewegbare Platte kann der Zuführkanal ein Schlauch sein, beispielsweise ein Schlauch umfassend PTFE (PTFE-Schlauch). Das Verschließen des Ausgangs der Düse entspricht dem Schneiden oder Abscheren des Materials, bevor es durch die Düse auf das Druckbett gelangt.

In einer weiteren bevorzugten Ausführungsform ist der Druckkopf dadurch gekennzeichnet, dass die Drehwalze eine Rotationsbewegung durchführt, sodass durch die Rotationsbewegung das Filament geschnitten oder geschert wird, wobei die Rotationsbewegung einen Winkel von bis zu ca. 50°, bevorzugt bis zu ca. 30°, besonders bevorzugt bis zu ca. 20° umfasst. Diese Werte sind dahingehend von Vorteil, dass sie den Ausgang vollständig oder teilweise verschließen können, um das Material zu schneiden und/oder zu scheren. Zu hohe Winkel wären ungeeignet, da die Gefahr eines Kontrollverlusts der Drehbewegung bestünde. Außerdem muss bei großen Drehwinkeln und einem Hebel die Druckkopfabmessungen vergrößert werden, um Kollisionen mit umliegenden Elementen zu vermeiden. Somit stellen die genannten Winkel vorteilhafterweise einen Ausgleich zwischen der Drehbewegung und der Größe der Drehwalze dar, was auch für die Größe des Heizblocks bestimmend ist. Weist die Drehwalze eher geringe Ausmaße auf, so kann auch der Heizblock kleiner ausgestaltet sein. Entsprechend verringert sich auch die Menge an Material, welches geschnitten oder geschert werden kann. Eine eher größere Drehwalze verringert auch die Möglichkeit an Winkeln, die die Drehwalze erreichen kann. Die angegebenen Werte stellen vorteilhafterweise einen Kompromiss zwischen der Größe der Drehwalze und damit des Heizblocks und die zu erreichenden Drehwinkel dar. Die Drehbewegung durch die Drehwalze bewirkt bevorzugt eine mechanische Spannung. Damit wird das Material geschert. Vorteilhafterweise ist dies besonders einfach, da die angreifende Kraft gering ist. Dies liegt an der Platzierung der Drehwalze innerhalb des Heizblocks.

In einer weiteren bevorzugten Ausführungsform ist der Druckkopf dadurch gekennzeichnet, dass innerhalb des Heizblocks eine Temperatur von bis zu ca. 400°C, bevorzugt bis zu ca. 300°C, besonders bevorzugt bis zu ca. 200°C, vorliegt, sodass das Filament innerhalb des Heizblocks geschmolzen wird. Die Verarbeitungstemperatur ist höher als die Schmelztemperatur, da eine höhere Temperatur den Plastifiziervorgang sowie die Anhaftung an die darunterliegende Schicht im 3D-Druck begünstigt. Die Schmelztemperatur tritt als Temperaturpunktwert bei teilkristallinen Polymeren auf, analog gilt zu amorphen Polymeren ein Temperaturbereich, in dem das Material vom thermoelastischen in den thermoplastischen Bereich übergeht. Die Temperaturen des Heizblocks können je nach Material optimiert und angepasst werden. Dabei ist es beispielsweise denkbar, dass beim Einsatz von PEEK (Polyetheretherketon) Temperaturen von ca. 450°C eingesetzt werden. Aber auch niedrigere Temperaturen sind möglich, beispielsweise beim Einsatz thermoplastischer Epoxidsysteme, wo ca. 80°C benötigt werden. Dabei ist es überraschend, dass es mit den angegebenen Temperaturbereichen möglich ist, ein möglichst breites Spektrum an Materialien für das Filament einzusetzen und innerhalb des Heizblocks zum Schmelzen zu überführen. Insbesondere kann die Temperatur innerhalb des Heizblocks reglementiert werden, beispielsweise durch einbaubare Heizpatronen und/oder Temperatursensoren. Dabei kann es denkbar sein, für bestimmte Bauteile die Temperatur des Heizblocks zu variieren, beispielsweise wenn unterschiedliche Filamente eingesetzt werden müssen, die jeweils Materialien mit unterschiedlichen Schmelztemperaturen umfassen. Innerhalb des Heizblocks nimmt das Filament einen flüssigen oder einen pastösen Zustand an. Dadurch erleichtert sich der Schnitt oder die Scherung des Materials erheblich gegenüber dem Stand der Technik. Je nach Temperatur und Material des Filaments kann diese eine unterschiedliche Viskosität aufweisen. Das hat auch Einfluss auf die Fließgeschwindigkeit des Materials und damit auch auf die generelle Druckgeschwindigkeit des Druckprozesses.

Die Verarbeitungstemperatur bezeichnet die Temperatur des aufgeschmolzenen Polymers bei der Verarbeitung, die unter anderem abhängig ist von der Extrusionsgeschwindigkeit, der Ausstoßmenge und der Düsentemperatur, da Energie durch das Polymer bis zum Düsenaustritt aufgenommen werden muss. Bei langsamen Druckgeschwindigkeiten und damit niedrigen Ausstoßmengen hat das Polymer genügend Zeit die Energie aufzunehmen und eine Temperatur ähnlich hoch der Düsentemperatur einzunehmen. Bei hohen Druckgeschwindigkeiten ist die Ausstoßmenge deutlich größer und das Polymer durchströmt schneller den heißen Bereich. Bei einer zu hohen Durchströmungsgeschwindigkeit muss die Energiemenge deutlich größer sein, sodass das komplette Material aufgeheizt werden kann. Deshalb erhöht man bei hohen Druckgeschwindigkeiten die Düsentemperatur im Vergleich zu langsameren Druckgeschwindigkeiten. Als beispielsweise Illustration sei PLA (Polyactide) genannt, bei dem bei ca. 60 mm/s eine Düsentemperatur von ca. 210°C verwendet wird, bei ca. 80 mm/s die Temperatur jedoch auf ca. 215°C - ca. 220°C erhöht wird. Das Hauptproblem ist hierbei, dass man die benötigte Energiemenge zwar berechnen, die Energiezuführung im 3D-Druck aber nur über eine konstante Düsentemperatur einstellen kann. Für statische Prozesse (konstante Geschwindigkeit) ist das ausreichend, bei dynamischen Prozessen (starke Unterschiede in den Geschwindigkeitskomponenten, insbesondere in der Vektorschreibweise der Geschwindigkeit) führt das aber zu unterschiedlichen Temperaturen im Polymer.

Aus dem Stand der Technik können verschiedene Heizblöcke von bekannten Herstellern von dem durchschnittlichen Fachmann ausgewählt werden. Beispielsweise kann ein Heizblock umfassend Aluminium ausgewählt werden, der ca. die Ausmaße 20 x 20 x 10 mm³ hat. Entscheidend ist hinsichtlich der Größe des Heizblocks, dass genug Volumen im Inneren geschaffen wird, sodass die Schneideeinheit hineinpasst. Zudem ist es wichtig, dass das Material des Heizblocks beständig ist bei den Temperaturen, die darin vorliegen. Der Heizblock kann auch diverse Gewinde umfassen, um beispielsweise Heizpatronen und/oder Temperatursensoren mit aufzunehmen. Ebenfalls kann der Heizblock Gewinde beinhalten, die für die Zuführung des Schlauchs als Zuführungskanal geeignet sind. Solche Vorkehrungen liegen im Kenntnisbereich eines durchschnittlichen Fachmanns und sollen daher nicht detailliert beschrieben werden.

In einer weiteren bevorzugten Ausführungsform ist der Druckkopf dadurch gekennzeichnet, dass der Druckkopf einen Kühlkörper umfasst, wobei der Kühlkörper das Filament vor einem Übergang des Filaments in den Heizblock räumlich umgibt. Der Kühlkörper kann in verschiedensten Variationen ausgeführt sein und dient dazu, das Filament kühl zu halten. Dadurch verflüssigt sich das Filament vorteilhafterweise nicht zu schnell. Durch das Kühlelement kann ein Erkalten des Faserverbundwerkstoffes aktiv gefördert werden, z. B., um einen besseren Transport des Filaments durch den Zuführungskanal zu erreichen. Ein Kühlkörper kann z. B. ein passives Kühlelement sein, welches im Wesentlichen durch einen Kühlkörper gebildet wird, welcher Rippen zur Kühlung aufweist. Solche Rippen (auch Kühlrippen oder Kühlfinnen genannt, engl. cooling fins) dienen zur Vergrößerung der Oberfläche, um die Wärmeübertragung an die Umgebung und damit die Kühlung zu verbessern. Diese gerippten Oberflächen können dabei Teil des Druckkopfes selbst sein oder auch als davon getrenntes Bauteil ausgeführt werden. Der Kühlkörper kann wiederum auch in direktem mechanischen Kontakt mit dem Heizblock stehen oder über ein zusätzliches Medium mit dem Heizblock verbunden werden. Dabei wird der Faserverbundwerkstoff im Inneren des Kühlkörpers geführt und dabei vorzugsweise gekühlt. Es kann ebenso bevorzugt sein, dass der Kühlkörper eine aktive Kühlung ermöglicht, z. B. durch ein kühlendes Peltier-Element. Der Kühlkörper kann gekühlt werden mit Wasser oder anderen Flüssigkeiten. Das Abkühlen kann auch mithilfe eines Lüfters, beispielsweise eines Axiallüfters oder eines Radiallüfters, erfolgen.

In einer weiteren bevorzugten Ausführungsform ist der Druckkopf dadurch gekennzeichnet, dass im Druckkopf ein Retract möglich ist. Der Retract ist ein Funktionsablauf nach Abschluss der gedruckten Bahn oder des Schneidevorgangs. Die Bewegung des Retracts wird bevorzugt durch den Slicer mitbestimmt. Insbesondere können hierdurch vorgegebene Prozessschritte des Retracts über den Slicer vermittelt und/oder eingegeben werden. Dies führt vorteilhafterweise zu einem zuverlässigen und sicheren Druck des herzustellenden Bauteils. Insbesondere wird vermieden, dass überschüssiges Material auf das Druckbett gelangt, was bei der Herstellung komplexer Bauteile und/oder Strukturen besonders erwünscht ist.

Der Ausdruck "Retract" stammt aus dem englischen Begriff "Retraction" und bedeutet Rückzug oder Einziehen. Hierbei wird durch die Bewegung eines Förderrades das Filament in den Druckkopf zurückgezogen, der Druck in der Düse wird so abgebaut und das geschmolzene Filament läuft nicht mehr aus der Düse. Der Retract umfasst also die Bewegung des Förderradpaares, um das Filament zurückzuziehen. Das ist bevorzugt, wenn der Druckkopf die Position wechselt und/oder dabei nichts druckt bzw. kein Material aus der Düse auf das Druckbett gelangen soll. Es war überraschend, dass die Einbindung eines Retracts im erfindungsgemäßen Druckkopf dafür sorgt, dass das endlosfaserverstärkte Filament besser gefördert werden kann. Durch den Retract wird das Material in den gekühlten Bereich zurückgezogen, kann erkalten und geht keine Verbindung mit dem PTFE Schlauch oder dem metallischen Förderkanal ein. Beim Neuansetzen am Beginn einer neuen Bahn kann das Material schneller durch die Düse gefördert, dann durch das Aufschmelzen des Verbundes am Beginn der Bahn angeschweißt bzw. verbunden und das Material durch den Förderantrieb und der Anhaftungen auf der Bauplattform oder der zuletzt gedruckten Schicht gedruckt werden. Da durch den Retract das Materialende nicht mehr flüssig bzw. pastös ist, kann ein Verstopfen der Düse und/oder der Schneideeinheit reduziert werden. Vorteilhafterweise gelangt kein überschüssiges Material auf das zu druckende Bauteil oder auf das Druckbett. Andernfalls wären verschiedene Details eines Bauteils nicht präzise ausgeprägt. Der Einbau eines Retracts wirkt sich somit vorteilhafterweise auf die Bauteilqualität und den Gesamtdruckprozess aus.

Das Gegenrad kann Teil der Mechanik bzw. der Fördereinheit sein, die das Filament in den Zuführkanal befördert. Insbesondere umfasst die Fördereinheit zur Förderung des Filaments in den Zuführkanal ein Förderrad. Das Förderrad kann beispielsweise durch einen Schrittmotor aktiv angetrieben werden. Zwischen dem Filament und dem Förderrad kann ein Druck aufgebaut werden, in dem ein Gegenrad das Filament an das Förderrad anpresst. Es ist auch möglich, dass das Gegenrad aktiv angetrieben wird, beispielsweise durch einen parallel geschalteten Schrittmotor oder durch eine Verzahnung, wie es in sogenanntem Dual Drive Antrieb der Fall ist. Auch ist es möglich, das Förderrad als Riemenantrieb, als Zahnrad, als Schneckenzahnrad oder als profiliertes Rad bestehend aus Metallen oder flexiblen Polymeren in die Fördereinheit zu integrieren.

Für die Erstellung eines gelungenen und sauberen 3D-Drucks ist es sehr wichtig, dass eine genaue Menge an Filament zur richtigen Zeit in einer bestimmten Position bedruckt werden kann. Umgekehrt ist es aber ebenso wichtig, dass im Augenblick, in dem kein Filament benötigt wird, auch kein Filament aus der Düse austritt. Dieses genaue Zusammenspiel der Komponenten wird von mehreren Faktoren (z. B. Temperatur, Filamentrückzug, Schnitt des Filaments) beeinflusst. Sind die Einstellungen nicht gut abgestimmt, kann es zur Faden- oder Tropfenbildung am Druckobjekt oder am Druckbett kommen.

Zudem werden hierfür verschiedene Einstellungen im Slicer vorgenommen, insbesondere hinsichtlich des Filamentrückzugsabstands, der Filamentrückzugsgeschwindigkeit, der Temperatur und der Bewegungsgeschwindigkeit des Druckkopfes.

Mit dem Filamentrückzugsabstand wird im Slicer festgelegt, wie viel Material angegeben in Millimetern zurückgezogen werden soll. Diese Einstellung ist für alle Druckkopfbewegungen vorteilhaft, die der Drucker ausführt, ohne gleichzeitig am Bauteil selbst zu bauen. Dies kann beispielsweise der Fall sein beim Sprung von einem Bauteil zum Nächsten oder von einer Bauteilwand zur gegenüberliegenden. Ist der gewählte Abstand des Filamentrückzugs zu groß gewählt, steht nicht genügend Material zur Verfügung, wenn der Drucker wieder am Bauteil baut. Ist der Abstand hingegen zu gering gewählt, tropft Filament aus der Düse zu einem Zeitpunkt nach, an dem das Filament nicht aus der Düse austreten sollte. Im Ergebnis ergibt sich die typische Fadenbildung, wenn der Druckkopf von einem Bauteilende zum Nächsten springt. Der ideale Abstand des Filamentrückzugs ist von Drucker zu Drucker und von Filament zu Filament unterschiedlich. Als Faustformel gilt im Stand der Technik: Direktextruder und langsam fließendes Material benötigen weniger Abstand (ca. 1 - ca. 2 mm) als Bowden-Extruder und schnell fließendes Material (ca. 4 - ca. 8 mm).

Die Rückzugsgeschwindigkeit bestimmt bevorzugt, wie schnell das Filament aus der Düse zurückgezogen wird. Ist die Rückzugsgeschwindigkeit zu gering gewählt, wird das Filament langsamer aus der Düse entfernt, als es gleichzeitig nach unten heraustropft. Ist die Rückzugsgeschwindigkeit zu hoch gewählt, kann das Filament abreißen. Im Stand der Technik haben sich Werte zwischen ca. 1200 bis ca. 6000 mm/min bzw. ca. 20 bis ca. 100 mm/s als vorteilhaft erwiesen (Millimeter pro Minute bzw. Millimeter pro Sekunde). Die genannten Rückzugsgeschwindigkeiten bilden vorteilhafterweise einen geeigneten Kompromiss, um das zusätzliche Tropfen, aber auch einen Riss des Filaments zu verhindern. Der optimale Wert variiert je nach eingesetztem Filament und Druckerkonfiguration. Sofern im Slicer keine geeignete Standardkonfiguration für die Material- und Druckerkombination vorliegen, kann das ideale Ergebnis mit kleinen Veränderungen der Rückzugsgeschwindigkeit angepasst werden.

Die Temperatur am Heizblock ist auch ein wichtiger Parameter beim Retract. Ist die Temperatur am Heizblock zu hoch, fließt das Filament schneller aus der Düse und könnte daher zum Nachtropfen neigen. Wenn sich die Temperatur des Heizblocks am oberen Ende der Empfehlung des Filamentherstellers befindet, kann die Temperatur schrittweise um ca. 5°C niedriger eingestellt werden. Hierbei gilt es zu beachten, dass dünne Filamente (z. B. 0,8 mm) schneller erhitzt werden als dicke (z. B. 1,8 mm). Entsprechend sind die optimalen Temperatureinstellungen für dünne Filamente niedriger als für dickere Filamente.

Die Fadenbildung tritt häufig dann auf, wenn der Druckkopf freie Flächen überqueren muss, an denen nichts zu drucken ist. Daher ist es bevorzugt, dass solche Fahrwege vermieden werden. Solche Einstellungen können im Slicer vorgenommen werden. Eine weitere Möglichkeit ist es, die Bewegungsgeschwindigkeit des Druckkopfes zu erhöhen, wenn dieser von einem Punkt zum Nächsten springen muss. Durch die Erhöhung dieser Bewegungsgeschwindigkeit reduziert sich die Zeit, die das Filament zum Nachtropfen hat. Unter Umständen reicht bereits die Erhöhung der Fahrgeschwindigkeit um einige mm/s, um eine Faden- bzw. Tropfenbildung zu vermeiden.

In einer weiteren bevorzugten Ausführungsform ist der Druckkopf dadurch gekennzeichnet, dass der Faserverbundwerkstoff einen Faservolumengehalt von ca. 20 % - ca. 50 %, bevorzugt von ca. 30 % -ca. 40 %, eine Steifigkeit zwischen ca. 50 GPa und ca. 200 GPa (Gigapascal), eine Zugfestigkeit zwischen ca. 400 MPa und ca. 1500 MPa (Megapascal) und eine Dichte zwischen ca. 1 g/cm³ und ca. 3 g/cm³ (Gramm pro Kubikzentimeter) besitzt. Die angegebenen Parameterbereiche können vorteilhafterweise durch den erfindungsgemäßen Druckkopf für das zu druckende Bauteil erreicht werden. Dadurch ist das Bauteil besonders fest, robust, stabil und kompakt. Die aufgeführten Parameterbereiche haben gezeigt, dass die Bauteilqualität in ihrer Gesamtheit steigt. Dies führt auch zu einer höheren Lebensdauer der bedruckten Bauteile, was für eine nachhaltige Verwendung des gedruckten Materials wünschens- und erstrebenswert ist.

Das Faservolumengehalt gibt das Verhältnis aus Fasern und Matrix an. Insbesondere wird durch das Faservolumengehalt das Verhältnis des Volumens der Fasern zum Gesamtvolumen des faserverstärkten Materials angegeben. Ein Faservolumengehalt von ca. 30 % führt vorteilhafterweise zu einem sehr guten Anhaften an die weiteren Schichten des Druckmaterials, da genügend Klebstoff durch die Matrix vorhanden ist. Ein Faservolumengehalt von ca. 40 % führt vorteilhafterweise zu höheren Festigkeiten, sodass das bedruckte Bauteil besonders stabil und robust ist. Es ist auch möglich, dass ein Faservolumengehalt von ca. 60 % vorliegt. Für andere Anwendungen können auch mehr als 60 % Faservolumengehalt erreicht werden. Auch geringere Faservolumengehälter, beispielsweise weniger als ca. 20%, sind möglich, was besonders vorteilhaft ist, um Parameter, wie z. B. elektrische Leitfähigkeit, Abschirmung und/oder eine Sensorik, zu modulieren.

Die Steifigkeit beschreibt den Widerstand eines Körpers gegen elastische Verformungen durch eine Kraft oder ein Moment (Biegemoment oder Torsionsmoment, je nach Beanspruchung). Entsprechend sind im Stand der Technik verschiedene Arten von Steifigkeiten bekannt, wie beispielsweise Dehn-, Schub-, Biege- und Torsionssteifigkeit. Die oben aufgeführten Parameter für die Steifigkeit betreffen bevorzugt eine, mehrere oder alle Arten von Steifigkeiten. Hierbei sei angemerkt, dass die Steifigkeit nicht nur von dem Werkstoff selbst, sondern auch von der Geometrie abhängt. Die Zugfestigkeit ist einer von mehreren Festigkeitskennwerten eines Werkstoffs, der die maximale mechanische Zugspannung beschreibt, die der Werkstoff aushält.

In einer weiteren bevorzugten Ausführungsform ist der Druckkopf dadurch gekennzeichnet, dass die Schneideeinheit mit einem Servomotor und/oder einem Hebel betätigt werden kann. Beispielsweise kann über den Hebel die Schneideeinheit durch den Servomotor bewegt werden. Vorteilhafterweise haben sich ein Servormotor und/oder ein Hebel als besonders zuverlässig erwiesen, um das Material innerhalb des Heizblocks zu schneiden und/oder zu scheren. Diese können händisch und/oder elektronisch bedient werden.

Ein Servomotor bezeichnet einen Elektromotor, der die Kontrolle der Winkelposition ihrer Motorwelle sowie der Drehgeschwindigkeit und Beschleunigung erlaubt. Ein Servomotor ist bevorzugt ein elektrischer Motor, der strom-, drehzahl- und/oder positionsgeregelt ist. Er ermöglicht die Einstellung vorgegebener Ströme, Drehzahlen und/oder Drehwinkel, die entsprechend die Bewegung der Schneideeinheit regeln können. Der Hebel kann ein beliebiger starrer Körper sein, der um einen Drehpunkt drehbar ist und die Betätigung der Schneideeinheit bewirkt. Durch die Konstruktion des Druckkopfes umfassend einen Heizblock mit einer Schneideeinheit, eine Düse und einen Hebel sind die Fertigungskosten vorteilhafterweise sehr gering.

In einem weiteren Aspekt betrifft die Erfindung ein Verfahren zum Schneiden umfassend einen Druckkopf gemäß der Erfindung. Vorzugsweise erfolgt das Schneiden durch eine Schneideeinheit, die sich innerhalb des Heizblocks befindet. Die Schneideeinheit kann als axial bewegbare Platte oder als Drehwalze realisiert sein. Es kann aber auch bevorzugt sein, dass die Schneideeinheit ein Messer und/oder klemmzangenartiges Element ist. Die Schneideeinheit kann so in Richtung des Filaments bewegt werden, dass dieses an einer gewünschten Stelle oder einem gewünschten Bereich durchtrennt wird. Die Schneideeinheit kann vorzugsweise während des Druckens abgesetzt werden und mit einem neuen Faserverbundwerkstoff wieder angesetzt werden. Vorteilhafterweise ist es mit der Schneideeinheit möglich, besonders komplexe Bauteile herzustellen, beispielsweise wenn sie viele Einkerbungen, Muster, Perforationen und/oder Ritzspuren beinhalten.

Der Schnitt oder die Scherung des Materials erfolgt durch die Schneideeinheit über die Wirkung einer mechanischen Kraft auf das Filament. Durch die Bewegung der Schneideeinheit wirkt eine Kraft von außen auf das zu druckende Material bzw. auf das Filament. Entsprechend dem 3. Newtonschen Axiom (Actio = Reactio) führt dies zu einer Beanspruchung, die als Spannung ausgedrückt wird und je nach Steifigkeit entsprechende Gestaltänderungen (Deformationen) auslöst. Insbesondere kann hierbei das Material geschert oder geschnitten werden.

Da sich die Schneideeinheit im Heizblock befindet, ist die Durchführung des Schnitts besonders einfach, da sich das Filament innerhalb des Heizblocks verflüssigt. Zudem hat sich die Positionierung der Schneideeinheit in Bezug auf die Einstellungen des Slicers als besonders vorteilhaft erwiesen. Dies liegt daran, dass im Slicer nur ein geringer Abstand zwischen dem Ausgang der Düse und der Schneideeinheit berücksichtigt werden muss, da sich die Schneideeinheit innerhalb des Heizblocks befindet. Als eine besondere Vorzugsvariante hat sich ergeben, wenn sich die Schneideeinheit exakt am Ausgang der Düse befindet, d. h. S=0 beträgt, sodass kein Abstand vorliegt. Ebenso kann S so klein gewählt werden, dass der ausgezogene Rest über bestehende Bahnen mit einer Breite von ca. 0,2 mm - ca. 1 mm nicht hinausragt. Wenn der Abstand S größer als 0 ist, wird nach dem Schnitt noch etwas Material aus der Düse gezogen. Liegt S in einem bevorzugten Bereich von ca. 0,2 mm - ca. 1mm, so wird nur eine kleine Menge herausgezogen, die für die folgende gedruckten Bahn vorteilhafterweise nicht mehr von Bedeutung ist, da eine Überlappung nicht mehr stattfindet. Hierbei war es überraschend, dass ein solcher Abstandsbereich zu diesen vorteilhaften Effekten führt. Es wurde erkannt, dass wenn hingegen beispielsweise ca. 20 - ca. 40 mm herausgezogen würde, man diese Stücke am Ende abtrennen müsste und/oder diese im Druckprozess im Wege sein und zu Kollisionen und evtl. einem damit verbundenem Druckabbruch führen könnte. Vorteilhafterweise werden solche Schwierigkeiten durch die genannten Abstände des Parameters S vermieden. Darüber hinaus konnte festgestellt werden, dass sich die Druckgeschwindigkeit des Druckkopfes erhöht hat, sowohl durch die Tatsache, dass weniger Kraft für einen Schnitt benötigt wird, als auch durch den positiven Effekt auf den Slicer.

In einer weiteren bevorzugten Ausführungsform ist das Verfahren dadurch gekennzeichnet, dass die Schneideeinheit eine lineare Bewegung, die Drehwalze eine Rotation oder der Druckkopf selbst eine lineare Bewegung oder eine Rotation durchführt, sodass das Filament geschnitten und/oder geschert wird. Die weiter oben genannten Vorteile für den erfindungsgemäßen Druckkopf gelten entsprechend für das erfindungsgemäße Verfahren.

Im Fall der axial bewegbaren Platte als Schneideeinheit geschieht der Schnitt oder die Scherung vorzugsweise in Querrichtung. Vorteilhafterweise ist es durch die Schneideeinheit möglich, in einer Schicht mehrere verstärkte Bereiche einzufügen. Des Weiteren können zwei oder mehr Bauteile ohne direkte Verbindung gedruckt werden oder auch Sollbruchstellen eingefügt werden, was von großem Vorteil ist.

Zur Konkretisierung der Bedeutung des Wortes "quer" oder "Querrichtung" in diesem Kontext ist dabei bevorzugt, dass die Bewegung des Filaments anhand eines dreidimensionalen Geschwindigkeitsvektors beurteilt wird. Der Geschwindigkeitsvektor wird durch drei zueinander orthogonale Vektorkomponenten in drei Raumrichtungen beschrieben. Die Richtung der Komponenten kann dabei vorzugsweise beliebig gewählt werden. Quer bedeutet nun vorzugsweise, dass die Bewegung der Schneideeinheit im Falle einer axial bewegbaren Platte durch eine Vektorkomponente senkrecht zum Geschwindigkeitsvektor des Filaments beschrieben werden kann.

Die Schneideeinheit kann bevorzugt auch als Drehwalze ausgestaltet sein. Dabei erfolgt der Schnitt dann durch eine Rotationsbewegung der Drehwalze. Durch die Rotationsbewegung verschließt eine Schneidekante den Ausgang der Düse und erzeugt so das Abschneiden/ Abscheren des Materials. Das Material kann durch einen Schlauch als Zuführkanal in die Drehwalze eingeführt werden. Vorzugsweise führt die Drehwalze eine Rotationsbewegung bis zu ca. 50°, bevorzugt bis zu ca. 30°, besonders bevorzugt bis zu ca. 20°, durch. Die weiter oben genannten Vorteile der Drehwinkel werden entsprechend für das erfindungsgemäße Verfahren ebenfalls realisiert. Die Rotationsbewegung der Schneideeinheit, insbesondere als Drehwalze kann hinsichtlich der Drehachse sowohl um die 2-Achse als auch um die 3-Achse rotieren. Vorteilhafterweise ist die Drehwalze variabel für verschiedene Drehachsen einsetzbar, sodass unterschiedliche Formen, Strukturen, Muster und/oder Einkerbungen in das zu druckende Material und damit das Bauteil eingebracht werden können. Bei einigen Anwendungen könnte es sein, dass nur eine Drehbewegung um die 2-Achse oder nur eine Drehung um die 3-Achse erwünscht ist. Vorteilhafterweise ist dies durch die Drehwalze möglich.

Hierbei bezeichnen 2- und 3-Achse die Pendants zur y- und z-Achse. Allerdings beziehen sich x-, y- und z-Achse auf ein globales (Koordinatensystem für den Gesamtaufbau) und 1-, 2- und 3-Achse auf ein lokales Achsensystem (Koordinatensystem für einzelne Komponenten).

Es kann ebenfalls bevorzugt sein, dass mehrere Komponenten des Druckkopfes, beispielsweise der Zuführkanal, die Schneidekanten, der Heizblock und ein evtl. vorhandener Kühlkörper, gemeinsam eine Rotationsbewegung oder eine lineare Bewegung durchführen. Auch durch eine einheitliche Bewegung dieser Komponenten kann das Material geschnitten und/oder geschert werden. Die lineare Bewegung erfolgt bevorzugt durch eine Translationsbewegung entlang der 1-Richtung und die Drehbewegung erfolgt vorzugsweise entlang der 2-Achse als Drehachse. Als Drehwinkel für die Rotationsbewegung können hierbei die weiter oben aufgeführten Winkel von bis zu 50°, bevorzugt bis zu 30°, besonders bevorzugt bis zu 20°, in Frage kommen. Hierbei ist zu erwähnen, dass in diesen Ausführungsformen die Schneideeinheit die Schneidekanten bilden, die bevorzugt vor dem Ausgang der Düse und sich innerhalb eines Abstandes S dazu befinden. Durch die lineare Bewegung oder die Rotationsbewegung wird der Ausgang der Düse geöffnet oder verschlossen. Ein Verschluss bezeichnet einen Schnitt des Materials und ein Öffnen des Ausgangs ermöglicht die Materialzufuhr durch die Düse auf das Druckbett.

In einem weiteren Aspekt betrifft die Erfindung ein System umfassend einen erfindungsgemäßen Druckkopf. Das System kann beispielsweise durch einen 3D-Drucker gebildet werden, welcher den erfindungsgemäßen Druckkopf umfasst. Ebenso kann das System einen Multimaterialdruckkopf bilden, also ein System umfassend mehrere Druckköpfe.

Durch einen Multimaterialdruckkopf können vorteilhafterweise mehrere Bauteile mit einer Mehrzahl Materialien in einem Druckvorgang hergestellt werden. Dies erlaubt deutlich mehr Möglichkeiten im 3D-Druck, da hier völlig unterschiedliche Kunststoffe in einem Bauteil kombiniert werden können. Die unterschiedlichen Materialien, insbesondere die unterschiedlichen Kunststoffe, können verschiedene Aufgaben übernehmen. Der Faserverbund ermöglicht hohe mechanische Eigenschaften, insbesondere eine höhere Festigkeit des Bauteils. Damit wird das gedruckte Bauteil stabiler, robuster und weist eine höhere Lebenszeit durch die verbesserte Bauteilqualität auf.

Beispielsweise kann es bevorzugt sein, dass Litzen für das Bedrucken des Bauteils eingesetzt werden, um für bestimmte Anwendungen eine elektrische Leitfähigkeit zu offerieren. In Verbindung mit einem ungefüllten oder mit Kurzfasern/Partikeln gefüllten Thermoplasten können komplexere Strukturen gedruckt werden. Das liegt daran, dass hier keine Randbedingungen, wie minimale Ablegeradien und große Bahnbreiten, wie beim Faserverbund auftreten. Durch die Integration von Supportmaterial können Überhänge mit mehr als ca. 45° im Druckprozess ermöglicht werden, während das Material nach dem Druck entfernt werden kann.

Eine Litze bezeichnet bevorzugt einen aus dünnen Einzeldrähten bestehenden und daher leicht zu biegenden elektrischen Leiter. Es wird überwiegend Kupfer als Leiter verwendet. Die Einzeldrähte der Litze (bis zu mehreren hundert) sind meistens von einer gemeinsamen Isolierhülle umschlossen. Solche Leiter heißen Litzenleitung. Sind mehrere solcher Leitungen in einem Kabel vereint, werden sie Adern genannt.

In einer weiteren bevorzugten Ausführungsform ist das System dadurch gekennzeichnet, dass 2 oder mehr Druckköpfe und/oder Düsen umfasst sind, wobei eine Höhe der Düsen und/oder der Druckköpfe starr oder verstellbar ist.

Den einzelnen Druckköpfen können unterschiedliche Filamente, die jeweils unterschiedliche Materialien umfassen, über eine Mechanik zugeführt werden. Die Mechanik kann dabei eine Fördereinheit umfassen. Das jeweilige Material wird mit einem Förderantrieb mit Gegenrad in die jeweiligen Druckköpfe oder Düsen gefördert. Über einen Bowdenschlauch kann eine Trennung von Förderantrieb und Druckkopf vorgenommen werden, sodass der Förderantrieb nicht mit dem Druckkopf bewegt werden muss und somit die bewegte Masse reduziert werden kann. Dies ist auch für die Druckgeschwindigkeit von Vorteil. Auch ist es so möglich, mehrere Materialien in eine beheizte Düse zu führen. Dabei sollte das andere Material bis zur gemeinsamen Zuführung zurückgezogen werden, sodass es nicht zu einer Verstopfung kommt. Die Druckköpfe können mit eigenen Kühlkörpern oder einem gemeinsamen Kühlkörper zusammengefasst werden. Eine starre Anordnung (alle Düsen auf einer Höhe) sowie eine aktive Höhenverstellung ist vorteilhaft. Eine Höhenverstellung kann beispielsweise über eine Wippe ermöglicht werden oder durch die Ansteuerung mit einer jeweiligen Bewegungseinheit, sodass für jede Düse die Höhe aktiv eingestellt werden kann. Vorteilhafterweise ist es damit möglich, dass jeder Druckkopf und/oder jede Düse Material zur Herstellung eines Bauteils drucken kann, während die anderen inaktiven Düsen einen größeren Abstand zur Oberfläche haben.

In einer weiteren bevorzugten Ausführungsform ist das System dadurch gekennzeichnet, dass das System eine Recheneinheit umfasst, die eine Software abspielt, die eine Bewegung des Systems oder des Druckkopfes bestimmt. Wie weiter oben beschrieben, wird die Software als Slicer bezeichnet und ist für das Bedrucken des Materials auf das Druckbett entscheidend mitverantwortlich.

Der Slicer "macht" eine Datei beispielsweise für einen 3D-Drucker druckbar. Modelle werden dazu in das STL-Dateiformat exportiert und in den Slicer geladen. In der STL-Datei ist vorzugsweise die Geometrie des zu erzeugenden Bauteils als Gitternetz (Mesh) beschrieben. Das Programm "schneidet" diese dann in einzelne horizontale Schichten und beschreibt für jede Schicht den Verfahrweg des Druckkopfes. Dies ist die Anweisung für das System oder den 3D-Drucker, wie er drucken soll, auch als G-code bezeichnet.

Im G-code stehen neben den x-, y- und z-Koordinaten außerdem noch Informationen zur Fahrgeschwindigkeit, Temperatur des Heizblocks, Steuerung des Kühlkörpers, Vorschubgeschwindigkeit des Materials, Generierung von zusätzlichen Strukturen für das Bauteil etc.

Es können wichtige Parameter für die Herstellung des Bauteils eingestellt werden, wie die Schichthöhe, die Druckgeschwindigkeit und die Temperatur des Heizblocks.

Die Schichthöhe entspricht der Stärke der einzelnen Schichten. Diese ist bevorzugt etwas kleiner als der Düsendurchmesser, in der Regel um ca. 50%. Allgemein gilt, je höher die einzelnen Schichten, desto schlechter die Optik des Druckes. Jedoch verkürzt sich die Druckzeit.

Die Auswirkungen der Druckgeschwindigkeit auf die Bauteilqualität sind abhängig vom 3D-Drucker. Die Einstellungen können je nach Modell zwischen ca. 60 - ca. 90 mm/s liegen. Einige Slicer ermöglichen auch das Einstellen verschiedener Geschwindigkeiten für unterschiedliche Bereiche des Druckmodells. Als Beispiel kann man hierfür Cura, Simplify3d und Slic3r nennen.

Die Temperatur, mit der gedruckt wird, beeinflusst die Verarbeitung des Materials. Einige Slicer-Programme ermöglichen die Einstellung verschiedener Temperaturen pro Schicht. So kann die Temperatur bei problematischen Schichten explizit angepasst werden.

Es hat sich für die Verarbeitung des Slicers als besonders vorteilhaft erwiesen, dass sich die Schneideeinheit innerhalb des Heizblocks befindet, da nur ein geringer Abstand zwischen der Düse bzw. dem Ausgang der Düse und der Schneideeinheit berücksichtigt werden muss. Dadurch wird die Rechenzeit innerhalb des Slicers und damit vorteilhafterweise die gesamte Druckzeit verkürzt.

Der erfindungsgemäße Druckkopf, das System und das Verfahren sollen im Folgenden anhand von Beispielen näher erläutert werden, ohne auf diese Beispiele beschränkt zu sein.

### Figuren

### Kurzbeschreibung der Figuren

- **Fig. 1**: Darstellung eines bevorzugten Druckkopfes und einer Nahsicht der Düse
- **Fig. 2**: Darstellung eines Schnitts durch eine axial bewegbare Platte
- **Fig. 3**: Darstellung eines Schnitts durch eine Drehwalze
- **Fig. 4**: Darstellung eines Schnitts durch eine Rotation um die 3-Achse
- **Fig. 5**: Darstellung eines Schnitts durch eine Rotation um die 2-Achse
- **Fig. 6**: Darstellung eines Schnitts durch Verschiebung entlang der 1-Achse
- **Fig. 7**: Darstellung eines Systems umfassend mehrere Druckköpfe
- **Fig. 8**: Darstellung einer Ausgestaltung der Schneideeinheit
- **Fig. 9**: Darstellung von Querschnittsänderungen bei einem oder mehreren verwendeten Filamenten

### Detaillierte Beschreibung der Figuren

**Fig. 1** zeigt eine bevorzugte Ausführungsform des erfindungsgemäßen Druckkopfes. Insbesondere werden spezifische Bereiche des Druckkopfes dargestellt, um verschiedene Positionen eindeutig kennzeichnen zu können. Zudem sind zwei Koordinatensysteme **3** und **9** abgebildet. Das Koordinatensystem **3** umfassend x-, y- und z-Achse ist ein globales Koordinatensystem und ein lokales Koordinatensystem wird durch **9** für den Druckkopf dargestellt.

Innerhalb eines Heizblocks **12** befindet sich eine Schneideeinheit als axial bewegbare Platte **15.** Ein Filament **10** umfassend eine Faser und eine Matrix als Verbundwerkstoff gelangt durch einen Zuführungskanal über einen Kühlkörper **11** in den Heizblock **12.** Durch die axial bewegbare Platte **15** wird das Material geschnitten und/oder geschert. Durch ein Schneiden ist es vorteilhafterweise möglich, besonders komplexe Bauteile herzustellen, die beispielsweise Einkerbungen, Muster, Strukturen etc. enthalten. Der Druckkopf kann durch verschiedene räumliche Bereiche beschrieben werden, die mit den einzelnen Komponenten des Druckkopfes korrespondieren. Zunächst verläuft das Filament **10** entlang eines Bereichs vor dem Kühlkörper **7,** um durch eine nicht abgebildete Mechanik in den Druckkopf befördert zu werden. Anschließend erfolgt die weitere Durchführung des Filaments **10** entlang eines kalten Bereichs **6,** der die Ausmaße des Kühlköpers **11** aufweist. Daraufhin gelangt das Filament in den Heizblock **12,** worin eine erhöhte Temperatur vorliegt, sodass das Filament **10** schmilzt. Die axial bewegbare Platte **15** kann das Filament besonders einfach schneiden und/oder scheren, da sie sich als Schneideeinheit innerhalb des Heizblocks **12** befindet. Ein heißer Bereich **5** verläuft entlang des Heizblocks **12.** Anschließend verläuft das Material durch eine Düse **13** und das Material **10** kann auf ein Druckbett gelangen (nicht abgebildet) und verläuft entlang eines Bereichs **4** nach dem Heizblock **12.** Die Schneideeinheit befindet sich an einem Ausgang der Düse und umfasst eine Schneidekante **17.** Dadurch muss im Slicer nur ein sehr geringer Abstand **S** zwischen der Düse **13** und der Schneideeinheit berücksichtigt werden, was die Rechenoperationen und damit auch den gesamten Druckprozess in ihrer Gesamtheit beschleunigt.

Des Weiteren ist in der **Fig. 1** eine Nahansicht im Bereich der Düse **13** zu sehen, der als Kreis eingezeichnet und die eigentliche Nahansicht im Kästchen nach dem Pfeil darstellt. Der Verlauf des Materials wird über eine kurvige gestrichelte Linie dargestellt. Die Düse **13** kann beispielsweise, wie hier abgebildet, in Form einer Düsenbohrung **14** ausgestaltet sein. Die Innen- und Außenkante der Düse sind in der Darstellung abgerundet, um das Filament besser zu führen und einer Materialschädigung an scharfen Kanten vorzubeugen. Weitere Komponenten, die sich am Heizblock **12** befinden können, wie Temperatursensoren und Heizkörper, sind nicht abgebildet. Die Position der Schneideeinheit innerhalb des Heizblocks **12** und/oder innerhalb des heißen Bereichs **5** hat sich auf den Schnitt bzw. auf die Scherung des Materials **10** als besonders vorteilhaft erwiesen, da nur wenig Kraft dafür erforderlich ist.

**Fig. 2** zeigt zwei Modi **1** und **2,** wobei **1** den Modus des "Druckens" und **2** den Modus des "Schneidens" zeigt. Durch eine Translationsbewegung der axial bewegbaren Platte **15,** welche eine Schneidekante umfasst, wird das Material geschnitten und/oder geschert. Bei der Translationsbewegung der axial bewegbaren Platte **15** verschließt die Schneidekante **17** den Ausgang der Düse **13.** Durch die Positionierung der Schneideeinheit, hier als axial bewegbare Platte **15,** ist der Schnitt besonders einfach. Darüber hinaus ist weiter unten in **Fig 2** ein Querschnitt A-A der axial bewegbaren Platte **15** zu sehen, die durch verschiedene geometrische Formen ausgestaltet sein kann. Diese geometrischen Formen haben sich bezüglich der Führung für den Schneidevorgang durch die axial bewegbare Platte **15** als sehr vorteilhaft erwiesen. Die axial bewegbare Platte kann beispielsweise einen rechteckigen Querschnitt **28,** einen trapezförmigen Querschnitt **29,** einen halbkreisförmigen Querschnitt (Rundbogen) **30** aufweisen. Zudem kann die axial bewegbare Platte **15** eine Schneidebohrung umfassen, die rechteckig **31** oder kegelförmig **32** sein kann. Die kegelförmige Schneidebohrung **32** hat sich dahingehend als sehr vorteilhaft erwiesen, dass das Material **10** lediglich an der Schneidekante **17** geschnitten und/oder geschert wird und nicht auch noch am Eingang der axial bewegbaren Platte **15.** Durch die kegelförmige Schneidebohrung **31** wird dies vermieden, da die obere Kante der Schneideplatte beim Schneiden nicht mit dem Material **10** in Berührung kommt.

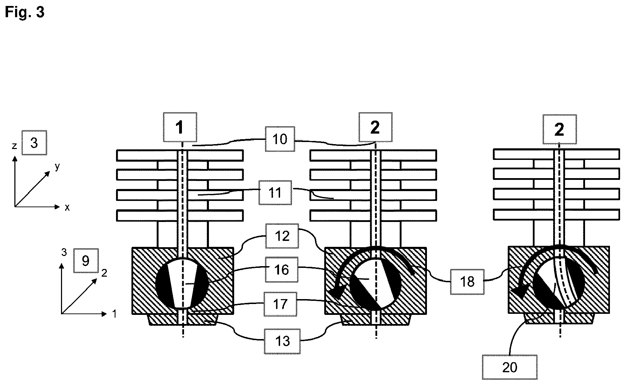

**Fig. 3** zeigt die Ausführungsform des Druckkopfes, in der die Schneideeinheit eine Drehwalze **16** ist. Durch die Rotationsbewegung entlang der 2-Achse wird das Material **10** durch die Schneidekante **17** der Drehwalze geschert und/oder geschnitten. Ganz rechts wird eine Ausführungsform abgebildet, bei der der Zuführungskanal ein Schlauch ist, der das Material **10** direkt zu der Drehwalze **16** führt. Wie in der **Fig. 3** bildhaft dargestellt ist, ist die Einkerbung der Drehwalze, wodurch die Schneidekante **17** gebildet wird, nicht "gerade". Die Bohrung oder Einkerbung in der Drehwalze **16** ist bevorzugt kegelförmig. Die Erfinder haben erkannt, dass dies von sehr großem Vorteil ist, da dadurch die obere Kante oder sogar der Führungsschlauch selbst geschert oder geschnitten wird. Ist die Düse **13** als Bohrung innerhalb des Heizblocks **12** ausgebildet, ist es bevorzugt, dass der Durchmesser der Düse **13** und der Bohrung der Drehwalze **16** im Wesentlichen identisch sind, beispielsweise 1 mm betragen. Ein Schlauch oder Rohr **20,** das den Zuführungskanal bildet, kann PTFE umfassen. Vorzugsweise führt die Drehwalze Drehungen bis zu 50° durch, wobei auch Drehungen bis zu 30° oder sogar lediglich bis zu 20° ebenfalls bevorzugt sind. Die Drehwinkel müssen so groß sein, dass sie den Ausgang der Düse **13** komplett verschließen können. Erst durch einen vollständigen Verschluss des Ausgangs der Düse **13** wird das Material geschert und/oder geschnitten. Da die Drehwalze **16** innerhalb des Heizblocks **12** eingebaut wird, ist diese entsprechend in kleineren oder gleichen Maßen ausgestaltet. Da innerhalb des Heizblocks **12** eine Temperatur vorliegt, die ähnlich, identisch oder oberhalb einer Schmelztemperatur des Materials oder einer Komponente des Materials liegt, verflüssigt sich das Filament und ist daher flüssig oder pastös. Somit ist der Schnitt oder die Scherung durch die Drehwalze **16** besonders einfach, da durch die Verflüssigung des Materials weniger Kraft benötigt wird.

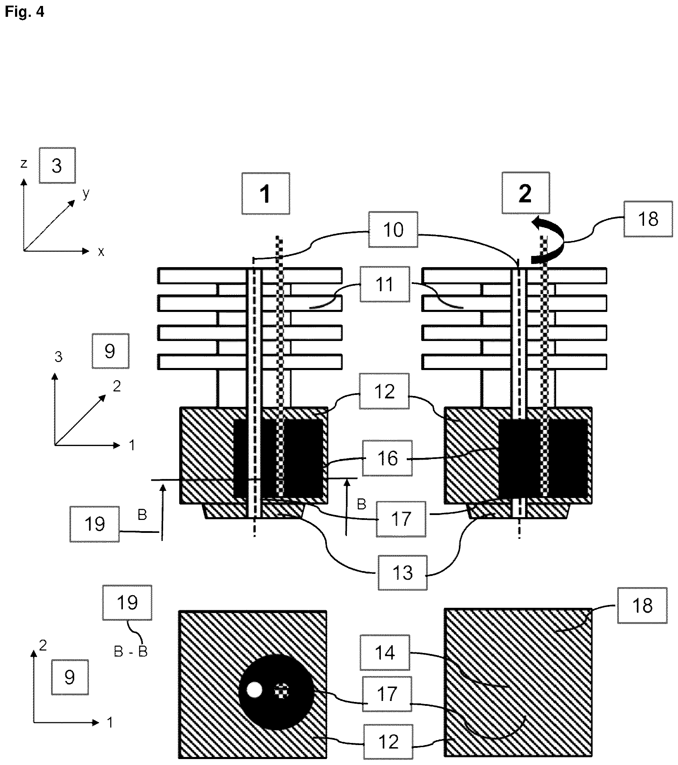

**Fig. 4** zeigt ebenfalls eine Möglichkeit des Schnitts durch eine Drehbewegung durch die Schneideeinheit als Drehwalze **16,** wobei hier die Drehachse die 3-Achse ist. Weiter unten ist der B-B Querschnitt **19** gezeigt. Das Prinzip des Schnitts durch eine Drehbewegung ist analog wie in **Fig. 2****.** Die Schneidekante **17** verschließt den Ausgang bzw. die Düsenbohrung **14** der Düse **13,** falls ein Schnitt erfolgen soll, andernfalls ist die Bohrung der Schneideeinheit über dem Ausgang der Düse.

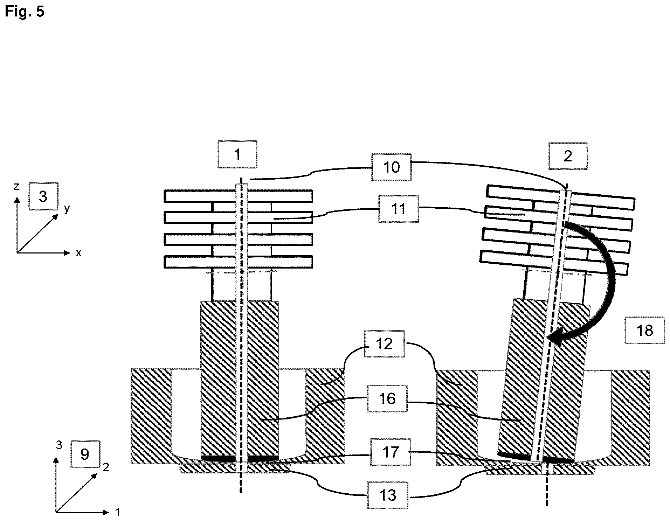

**Fig. 5** zeigt eine weitere Option, wie das Material **10** geschnitten und/oder geschert werden kann, wobei sich die Schneidekanten **17** am Ausgang der Düse **13** und damit immer noch innerhalb des Heizblocks **12** befinden. Diese Variante ist ebenfalls bevorzugt, da zusätzliche Bauteile wie eine axial bewegbare Platte **15** oder eine Drehwalze **16** nicht benötigt werden. Hierbei erstreckt sich der heiße Bereich **5** etwas oberhalb des Heizblocks **12.** Dabei vollführt eine Zuführung umfassend den heißen Bereich **5,** den kalten Bereich **6** und den Zuführungskanal eine Drehbewegung mit der 2-Richtung als Drehachse.

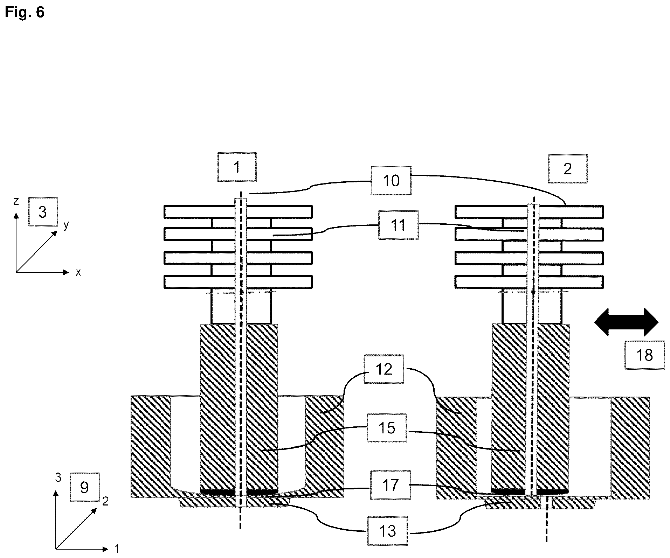

**Fig. 6** zeigt den analogen Schneidevorgang wie in **Fig. 5****,** wobei hierbei keine Drehbewegung, sondern eine Translationsbewegung der Zuführung umfassend den heißen Bereich **5,** den kalten Bereich **6** und den Zuführungskanal durchgeführt wird. Der heiße Bereich **5** kann selbst geheizt werden, beispielsweise durch Heizelemente, oder in direktem Kontakt mit dem Heizblock **12** stehen. Somit kann das Material **10** schon bereits im heißen Bereich **5** geschmolzen werden.

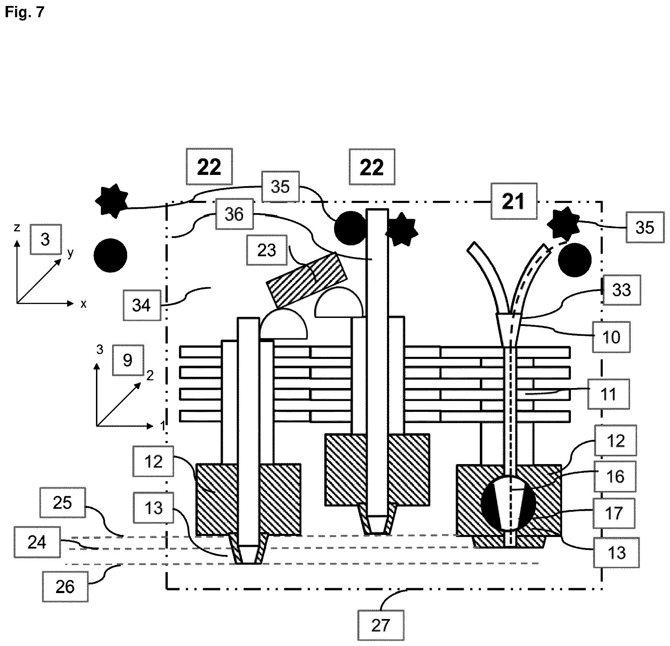

**Fig. 7** zeigt eine Ausführungsform eines Systems dargestellt durch einen Multimaterialdruckkopf **27.** Hierdurch können vorteilhafterweise komplexere Bauteile hergestellt werden, die mehr Materialien benötigen als eine Matrix und eine Faser. Dadurch kann das Bauteil eine höhere Festigkeit erlangen, sodass robustere Bauteile mit einer längeren Lebenszeit erlangt werden. Die Filamente weisen einen höheren Durchmesser **22** auf (links und mittig). Das jeweilige Material wird mit einem Förderantrieb **35** durch ein Gegenrad in die Druckköpfe befördert. Der Förderantrieb **35** kann direkt mit dem System verbunden sein. Es kann auch sein, wie abgebildet, dass über ein Bowdenschlauch **34** das Material in die Druckköpfe befördert wird. Dadurch gibt es eine Trennung zwischen Förderantrieb **35** und System, sodass vorteilhafterweise weniger Masse bewegt werden muss. Ein Filament mit Kurzfaser-/ Partikelverstärkung oder umfassend Thermoplasten **36** kann in einer der Druckköpfe (hier links und mittig) ebenso zugeführt werden, um besonders robuste Bauteile herzustellen. Damit erhöht sich auch die Druckgeschwindigkeit und die Druckzeit wird verkürzt. Es wird ebenfalls ermöglicht, mehrere Materialien in den Druckkopf und damit in die Düsen zu befördern, wobei dabei auch bestimmte Materialien durch den Förderantrieb **35** zurückgezogen werden können. Durch eine Wippe **23** können die einzelnen Druckköpfe (links und mittig) höhenverstellt werden. Ein Druckkopf kann dabei starr auf einer festen Ebene vorliegen (rechts) und als Düsensystem **21** aufgebaut sein, was dargestellt wird durch eine ebene feste Düse **24.** Eine Parkposition von beweglichen Düsen **25** und eine aktive Position beweglicher Düsen **26** wird durch gestrichelte Linien gezeigt. Vorteilhafterweise wird durch das System ermöglicht, dass jeder Druckkopf bei Aktivierung auf das Druckbett zur Herstellung des Bauteils drucken kann. Währenddessen können inaktive Düsen einen größeren Abstand zum Druckbett erlangen.

**Fig. 8** zeigt die mögliche Ausbildung der Schneideeinheit. Die Abbildung wurde als Matrix angelegt, in Zeilen sind die gerade Schneideplatte **15,** die Drehwalze **16** und die Schnitte **19,** markiert mit A - A, angeordnet. In Spalten ist zu Beginn die gerade Bohrung **31,** die Kegelbohrung **32** und eine Nut mit Bohrung **33** angeordnet. Als Beispiel für alle Bilder wurde oben links, der Heizblock **12** und die Düse **13** eingezeichnet. Weitere Elemente sind analog zu den anderen Bildern. Bei **32** und **33** ist ein Schlauch eingezeichnet, der das Filament führt. Bei **31** bilden sich oben und unten an der Schneideeinheit eine Schneidekante **17** aus. Bei **32** und **33** ist die Bohrung so ausgebildet, dass der Schnitt nur unten an der Schneidekante **17** möglich ist. Oben wurde die Kante so versetzt, dass beim Schnitt diese Kante das Filament bzw. den Schlauch nicht schneidet oder quetscht. Dies ist möglich, wenn beim Kegel **32** der obere Durchmesser so groß ist, dass bei der Drehbewegung die Kante den Schlauch nicht berührt, während unten, nahe der Düse, die Schnittkante gebildet wird. Bei der Nut mit Bohrung **33** wurde das Material durch eine Nut so abgetragen, dass auch hier die obere Kante den Schlauch nicht berührt, während unten die Schnittkante nahe der Düse gebildet wird.

**Fig. 9** zeigt die Querschnittsänderungen bei einem oder mehreren verwendeten Filamenten. Der Querschnitt B - B zeigt die Anordnung der Filamente in der Zuführung **15** und der Querschnitt C - C zeigt den Querschnitt der abgelegten Bahn. Im Folgenden werden die Querschnitte B - B beschrieben. Bei **37** wird ein endlosfaserverstärktes Filament zugeführt, das von einem Thermoplasten zusätzlich ummantelt wurde. Dadurch kann die Lagenanhaftung vorteilhafterweise erhöht werden. Bei **38** werden 3 endlosfaserverstärkte Filamente zusammengeführt. Bei **39** werden 4 Materialien zusammengeführt mit 3 Strängen des Types A, z. B. Kohlenstofffasern, und ein Strang des Types B, z. B. Aramidfasern. Bei **40** werden 6 Stränge zusammengeführt, 5 endlosfaserverstärkte Filamente und in der Mitte ein Strang des Types C, der wie Typ B ein anderes endlosfaserverstärktes Material sein kann oder auch ein unverstärkter Kunststoff zur Erhöhung des Matrixanteils oder zur Verwendung eines fadenförmigen Sensors. Nun sollen die Querschnitte C - C beschrieben werden. Bei **37** wird aus einem runden Querschnitt ein ellipsoider Querschnitt erzeugt, in dem die abgerundete Düse **13** im Heizblock **12** das Material aufschmilzt und auf der Bauplattform anpresst. Bei **37** ist der Strang mit einer Thermoplastenummantellung für eine bessere Anhaftung versehen. Bei **38** sind in C - C die 3 endlosfaserverstärkten Filamente nebeneinander angeordnet. Bei **39** sind die 4 Filamente wahllos angeordnet, wobei das Material vom Typ B im Querschnitt neben Typ A vorliegt. In **40** wird das Material vom Typ C vom endlosfaserverstärkten Verbund ummantelt (5 Filamente). Je nach Anzahl der zugeführten Stränge, Größe der Führung **15** (PTFE Schlauch) und Kombination aus Druckrichtung und Zuführungsorientierung, ergeben sich unterschiedliche Ausbildungen des gedruckten Querschnitts. Dabei können auch Mischformen der dargestellten Querschnitte nebeneinander bei **38,** zentrisch **39** oder ummantelt **40** möglich sein.

### BEZUGSZEICHENLISTE

- 1: Modus Drucken
- 2: Modus Schneiden
- 3: Globales Koordinatensystem
- 4: Bereich nach Düse
- 5: Heißer Bereich
- 6: Kalter Bereich
- 7: Bereich vor Kühlkörper
- 8: Abstand S Düse bzw. Ausgang der Düse und Schneidekante
- 9: Lokales Koordinatensystem
- 10: Filament/Material
- 11: Kühlkörper
- 12: Heizblock
- 13: Düse
- 14: Düsenbohrung
- 15: Axial bewegbare Platte
- 16: Drehwalze
- 17: Schneidekante
- 18: Schneidebewegung
- 19: Querschnitt Schneideeinheit
- 20: Schlauch oder Rohr als Zuführungskanal
- 21: Düsensystem mit Schneideeinheit für Verbundwerkstoffe
- 22: Durchmesser
- 23: Wippe
- 24: Ebene Feste Düse
- 25: Parkposition beweglicher Düsen
- 26: Aktive Position beweglicher Düsen
- 27: Multidruckkopf
- 28: Querschnitt Schneideplatte linear - Rechteck
- 29: Querschnitt Schneideplatte linear - Trapez
- 30: Querschnitt Schneideplatte linear - Rundbogen
- 31: Gerade Bohrung
- 32: Kegelbohrung
- 33: Bohrung mit Nut
- 34: Bowdenschlauch
- 35: Förderantrieb
- 36: Filament mit Kurzfaser-/ Partikelverstärkung oder umfassend Thermoplasten
- 37: Zuführung von einem Filament mit Thermoplastummantellung
- 38: Zuführung von 3 endlosfaserverstärkten Filamenten
- 39: Zuführung von 4 endlosfaserverstärkten Filamennten, 3 des Types A und 1 des Types B
- 40: Zuführung von 6 Filamenten, 5 endlosfaserverstärkt und 1 des Types C

## Patentansprüche

1. Druckkopf zur additiven Fertigung von Faserverbundwerkstoffen umfassend einen Zuführungskanal, ein Filament (10), einen Heizblock (12), eine Düse (13) und eine Schneideeinheit, wobei das Filament (10) durch den Zuführungskanal in die Düse (13) gelangt, wobei die Düse (13) einen Ausgang und einen Eingang umfasst und das Filament (10) durch den Zuführungskanal den Ausgang der Düse (13) betritt und über den Eingang die Düse (13) verlässt und auf einem Druckbett abgelegt wird, wobei die Düse (12) am Heizblock (12) befestigt ist oder als Öffnung im Heizblock integriert ist,
**dadurch gekennzeichnet, dass**
die Schneideeinheit innerhalb des Heizblocks (12) integriert ist und die Schneideeinheit dazu konfiguriert ist, das Filament innerhalb des Heizblocks (12) zu schneiden und/oder zu scheren.

2. Druckkopf nach dem vorherigen Anspruch
**dadurch gekennzeichnet, dass**
sich die Schneideeinheit innerhalb eines Abstandes S zum Ausgang der Düse (13) befindet, wobei S zwischen im Wesentlichen 0 und 100 mm liegt, bevorzugt bis zu 10 mm, besonders bevorzugt bei 1 mm.

3. Druckkopf nach einem oder mehreren der vorherigen Ansprüche
**dadurch gekennzeichnet, dass**
die Schneideeinheit eine oder mehrere axial bewegbare Schneideplatten (15) oder eine Drehwalze (16) umfasst.

4. Druckkopf nach einem oder mehreren der vorherigen Ansprüche
**dadurch gekennzeichnet, dass**
die Schneideeinheit als axial bewegbare Platte (15) einen rechteckigen (28), trapezförmigen (29), kegelförmigen oder halbkreisförmigen (30) Querschnitt aufweist, wobei durch eine Bewegung der Schneideeinheit der Ausgang der Düse (13) verschlossen werden kann.

5. Druckkopf nach einem oder mehreren der vorherigen Ansprüche
**dadurch gekennzeichnet, dass**
die Schneideeinheit eine Schneidebohrung umfasst, wobei die Schneidebohrung als eine gerade Bohrung (31), eine Kegelbohrung (32) und/oder als Nut (33) ausgebildet ist.

6. Druckkopf nach Anspruch 3
**dadurch gekennzeichnet, dass**
die Drehwalze (16) eine Rotationsbewegung durchführt, sodass durch die Rotationsbewegung das Filament (10) geschnitten oder geschert wird, wobei die Rotationsbewegung einen Winkel von bis zu 50°, bevorzugt bis zu 30°, besonders bevorzugt bis zu 20°, umfasst.

7. Druckkopf nach einem oder mehreren der vorherigen Ansprüche
**dadurch gekennzeichnet, dass**
innerhalb des Heizblocks (12) eine Temperatur von bis zu 400°C, bevorzugt bis zu 300°C, besonders bevorzugt bis 200°C, vorliegt, sodass das Filament (10) innerhalb des Heizblocks (12) geschmolzen wird.

8. Druckkopf nach einem oder mehreren der vorherigen Ansprüche
**dadurch gekennzeichnet, dass**
der Druckkopf einen Kühlkörper (11) umfasst, wobei der Kühlkörper (11) das Filament (10) vor einem Übergang des Filaments (10) in den Heizblock (12) räumlich umgibt.

9. Druckkopf nach einem oder mehreren der vorherigen Ansprüche
**dadurch gekennzeichnet, dass**
der Druckkopf einen Retract umfasst, wobei der Retract das Filament (10) zurück in den Druckkopf befördert, wobei ein Slicer eine Bewegung des Retracts mitbestimmt.

10. Druckkopf nach einem oder mehrerer der vorherigen Ansprüche
**dadurch gekennzeichnet, dass**
der Faserverbundwerkstoff einen Faservolumengehalt von 20 % - 50%, bevorzugt von 30 % - 40 %, eine Steifigkeit zwischen 50 GPa und 200 GPa, eine Zugfestigkeit zwischen 400 MPa und 1500 MPa und eine Dichte zwischen 1 g/cm³ und 3 g/cm³ besitzt.

11. Druckkopf nach einem oder mehreren der vorherigen Ansprüche
**dadurch gekennzeichnet, dass**
die Schneideeinheit mit einem Servomotor und/oder einem Hebel betätigt werden kann.

12. Verfahren zum Schneiden eines Materials während einer additiven Fertigung umfassend einen Druckkopf nach einem oder mehreren der vorherigen Ansprüche
**dadurch gekennzeichnet, dass**
die Schneideeinheit eine lineare Bewegung, eine Rotation oder der Druckkopf selbst eine lineare Bewegung oder eine Rotation durchführt, sodass das Filament geschnitten und/oder abgeschert wird.

13. System umfassend einen Druckkopf nach einem oder mehreren der vorherigen Ansprüche.

14. System nach dem vorherigen Anspruch
**dadurch gekennzeichnet, dass**
dass 2 oder mehr Druckköpfe und/oder Düsen umfasst sind, wobei eine Höhe der Düsen und/oder der Druckköpfe starr oder verstellbar ist.

15. System nach Anspruch 13 und/oder Anspruch 14
**dadurch gekennzeichnet, dass**
das System eine Recheneinheit umfasst, die eine Software abspielt, die eine Bewegung des Systems oder eines oder mehrerer Druckköpfe bestimmt.
